# EUROPÄISCHE PATENTSCHRIFT

(11) **EP 4 249 773 B1**
(45) Veröffentlichungstag und Bekanntmachung des Hinweises auf die Patenterteilung: **06.05.2026**
(21) Anmeldenummer: 22163123.7
(22) Anmeldetag: 21.03.2022
(51) Int. Cl.: F16H 57/025, F03D 15/00, F16H 57/028

(54) **TRIEBSTRANGSANORDNUNG MIT ZUGMITTELBASIERTER ZUG-MOMENTABSTÜTZUNG SOWIE ZUGMITTELBASIERTES ABSTÜTZVERFAHREN FÜR TRIEBSTRÄNGE UND VERWENDUNG**
DRIVE TRAIN ASSEMBLY WITH TRACTION-BASED TRACTION MOMENT SUPPORT AND TRACTION-BASED SUPPORT METHOD FOR DRIVE LINES AND USE
DISPOSITIF DE CHAÎNE CINÉMATIQUE À SUPPORT DE COUPLE DE TRACTION BASÉ SUR LE MOYEN DE TRACTION, AINSI QUE PROCÉDÉ DE SUPPORT BASÉ SUR LE MOYEN DE TRACTION POUR CHAÎNES CINÉMATIQUES ET UTILISATION

(43) Veröffentlichungstag der Anmeldung: 27.09.2023
(73) Patentinhaber: Flender GmbH, 46395 Bocholt (DE)
(72) Erfinder: HAMBRECHT, Ralf, 46395 Bocholt (DE)
(74) Vertreter: Michalski Hüttermann & Partner Patentanwälte mbB

(56) Entgegenhaltungen:
- EP-A1- 1 855 001
- DE-A1- 102018 219 012
- DE-U1- 202012 013 022
- US-A1- 2017 253 466
- US-B2- 11 035 743

## Beschreibung

### TECHNISCHES GEBIET

Die vorliegende Erfindung betrifft eine Triebstranganordnung für Industriegetriebe, aufweisend: ein erstes Gehäuse, welches eine Lagerung für eine Welle des Triebstrangs umgibt, und eine insbesondere axial fluchtend an die Welle gekuppelte/gekoppelte Getriebekomponente, welche von einem zweiten Gehäuse umgeben ist; die Erfindung stellt eine zwischen diesen Gehäusen wirkende Zug-Drehmomentabstützung bzw. Zug-Momentenabstützung umfassend wenigstens ein zumindest an das zweite Gehäuse gekoppeltes Zugmittel bereit. Die vorliegende Erfindung betrifft ferner ein entsprechendes zugmittelbasiertes Abstützverfahren.

### HINTERGRUND DER ERFINDUNG

Bei der Drehmomentwandlung durch Getriebe sind üblicherweise Differenzmomente aus Eingangsmoment und Ausgangsmoment gegenüber der Umgebung abzustützen. Insbesondere bei Planetengetrieben für Windkraftanlagen wie auch für Industrieanwendungen im Allgemeinen wird zur Drehmomentabstützung gegenüber der nicht rotierenden und häufig stationären Umgebung üblicherweise eine Drehmomentstütze oder eine Flanschverbindung eingesetzt. Derartige konventionelle Drehmomentstützen (insbesondere in massiver Ausgestaltung) führen jedoch zu einer deutlichen Vergrößerung der Bauraumabmessungen des Getriebes sowie des Gewichts des Getriebes. Dies führt nicht zuletzt auch bei logistischen Vorgängen (insbesondere Transportvorgängen) zu Einschränkungen bzw. Mehrkosten durch größeren Bauraumbedarf sowie aufgrund von Platzrestriktionen in einzelnen Anwendungsfällen auch zu weiteren Nachteilen z.B. bezüglich Zugänglichkeit in einer Windenergieanlage oder speziell bei Planetengetrieben auch hinsichtlich Einschränkungen im Planentenhohlraddurchmesser. Bei einer Flanschanbindung ermöglicht die direkte Ankopplung üblicherweise auch keine einfache Schwingungsentkopplung. Zur Entkopplung zwischen Getriebe und Umgebung wurden bisher z.B. Elastomer-Elemente eingesetzt, insbesondere um unterschiedliche Verformungen ausgleichen zu können und um Schwingungsanregungen durch das Getriebe reduzieren zu können. Der Stand der Technik wird durch die Dokumente EP1885001 A1, welches die Basis der zweiteiligen Form der unabhängigen Ansprüche bildet, DE202012013022 U1, US2017/253466 A1 und DE102018219012 A1 gebildet.

Ausgehend davon besteht ein Bedarf an vorteilhafteren Maßnahmen zur Drehmomentabstützung von/in Triebsträngen, insbesondere auch bei vergleichsweise großen Lasten oder bei vergleichsweise stark dynamischer Belastung. Dabei soll insbesondere auch eine Alternative zur Verwendung klassischer Elastomer-Elemente geschaffen werden.

### ZUSAMMENFASSUNG DER ERFINDUNG

Es ist die Aufgabe der vorliegenden Erfindung, Maßnahmen aufzuzeigen, mittels welche eine besonders vorteilhafte Drehmomentabstützung bzw. Momentenabstützung im Allgemeinen in Triebsträngen sichergestellt werden kann. Insbesondere besteht die Aufgabe auch darin, eine Drehmomentabstützung bzw. Momentenabstützung im Allgemeinen für Triebsträngen derart zu konzipieren, dass die im Bereich eines Getriebes auf den Triebstrang wirkenden Kräfte und Momente bzw. Belastungen auf besonders elegante Weise möglichst umfassend abgefangen und weitergeleitet werden können.

Die Lösung der Aufgabe erfolgt durch eine Triebstranganordnung mit den Merkmalen des Anspruchs 1, durch ein Abstützverfahren mit den Merkmalen des nebengeordneten Verfahrensanspruchs sowie durch Verwendungen gemäß den Merkmalen des nebengeordneten Verwendungsanspruchs. Bevorzugte Ausgestaltungen sind in den Unteransprüchen und in der nachfolgenden Beschreibung angegeben.

Ein Aspekt der Erfindung betrifft eine vorteilhafte Art und Weise einer zugmittelbasierten Drehmomentabstützung in einer Triebstranganordnung, insbesondere auch in Kombination mit der Aufnahme von Gewichtskräften und/oder Kippmomenten.

Bereitgestellt wird insofern eine Triebstranganordnung für Industriegetriebe, insbesondere zur Anbindung an einen Rotor einer Windenergieanlage, aufweisend: ein erstes Gehäuse, welches eine Lagerung für eine Welle des Triebstrangs umgibt, sowie eine insbesondere axial fluchtend an die Welle gekuppelte/gekoppelte Getriebekomponente, welche von einem zweiten Gehäuse umgeben ist; Erfindungsgemäß wird vorgeschlagen, die Triebstranganordnung dabei auch mit einer Zug-Momentenabstützung oder Zug-Drehmomentabstützung auszustatten, welche wenigstens ein zumindest an das zweite Gehäuse gekoppeltes Zugmittel umfasst, wobei die Zug-Momentenabstützung oder Zug-Drehmomentabstützung einem auf die Welle oder die daran gekoppelte Getriebekomponente wirkenden Drehmoment entgegenwirkt; wobei die Zug-Momentenabstützung oder Zug-Drehmomentabstützung zur Weiterleitung der auf das wenigstens eine Zugmittel ausgeübten Reaktionskräfte zumindest am ersten Gehäuse abgestützt ist. Dies liefert einerseits eine sehr ruhige und wahlweise auch gedämpfte (vorgespannte) Anordnung insbesondere auch bei wahlweise vollständiger Entkopplung vom Maschinenträger, andererseits kann die Kraftübertragung ohne Druckkräfte und ohne Momente erfolgen, so dass auch eine sehr effektive Entkopplung z.B. hinsichtlich Schwingungen oder dergleichen dynamischen Effekten realisierbar ist.

Anders ausgedrückt: Die Erfindung stellt eine Triebstranganordnung für Industriegetriebe bereit, insbesondere zur Anbindung an einen Rotor einer Windenergieanlage, aufweisend: ein erstes Gehäuse, welches eine Lagerung für eine Welle des Triebstrangs umgibt, eine insbesondere axial fluchtend an die Welle gekuppelte/gekoppelte Getriebekomponente, welche von einem zweiten Gehäuse umgeben ist, sowie eine Zug-Momentenabstützung (bzw. speziell eine Zug-Drehmomentabstützung) umfassend wenigstens ein das erste und zweite Gehäuse miteinander koppelndes Zugmittel, wobei die Zug-Momentenabstützung (bzw. speziell die Zug-Drehmomentabstützung) einem auf die Welle oder die daran gekoppelte Getriebekomponente wirkenden Drehmoment entgegenwirkt; wobei die Zug-Momentenabstützung (bzw. speziell die Zug-Drehmomentabstützung) zur Weiterleitung der auf das wenigstens eine Zugmittel ausgeübten Reaktionskräfte am ersten Gehäuse abgestützt ist, insbesondere ausschließlich zugmittelbasiert.

Sofern hier nicht anders beschrieben, wird mit dem Begriff "Drehmoment" auf ein um die axiale Hauptausrichtung des Triebstrangs wirkendes Moment Bezug genommen, also auf ein Antriebs-/Abtriebsdrehmoment bzw. eine diesbezügliche Differenz.

Gemäß der vorliegenden Offenbarung wird im Besonderen auf eine Zug-Drehmomentabstützung Bezug genommen, und allgemeiner auch auf eine Zug-Momentenabstützung. Sofern nicht anders konkretisiert, wird vorliegend im Zusammenhang mit dem Begriff Zug-Drehmomentabstützung speziell die Abstützung eines um die Längserstreckung des Triebstrangs wirkenden Drehmoments in den Vordergrund gestellt (wahlweise ausschließliche Realisierung einer Abstützung des Drehmoments), und im Zusammenhang mit dem allgemeineren Begriff Zug-Momentenabstützung auch eine Abstützung von gravitationskraftbegründeten Momenten bzw. Kippmomenten mit einbezogen. Gleichwohl kann sich die jeweilige Offenbarung auf beide Arten der Abstützung beziehen, sofern dies nicht explizit verneint ist. Auch insofern sind beide Begriffe austauschbar zu verstehen, wie auch durch die oder-Kombinationen der vorliegenden Offenbarung hervorgehoben wird.

Die Erfindung kann beispielsweise für Windgetriebe, Getriebe-Generator-Kombinationen, Triebstränge für Windenergieanlagen oder dergleichen Industriegetriebe im Allgemeinen implementiert sein/werden. Insbesondere im Zusammenhang mit vergleichsweise robusten Zweipunkt-Triebstranglagerungen ermöglicht die erfindungsgemäße Art und Weise der Kopplung der Zugmittel auch ohne aufrichtendes Axiallastpaar eine drehmomentabhängige Kompensation von Kippmomenten und Gewichtskräften.

Durch die erfindungsgemäße Zug-Drehmomentabstützung kann das Drehmoment auch vorteilhaft nahe am vorhandenen Durchmesser einer Getriebekomponente abgestützt werden (beispielsweise am Durchmesser des Hohlrades einer Planetengetriebestufe). Die Zug-Drehmomentabstützung erfordert auch keine nachteiligen Bauraumvergrößerungen (insbesondere da die zugkraftübertragenden Komponenten problemlos dafür flexibel angeordnet werden können und keinen spürbaren Bauraumanspruch haben), was sich auch im Zusammenhang mit dem Transport und der Montage der Komponenten eines jeweiligen Triebstrangs als sehr vorteilhaft erweist. Die Zug-Drehmomentabstützung kann das Abstütz-Drehmoment dabei auch an mehreren Stellen über den Umfang des Getriebes verteilt abgreifen und an eine/die axial übergreifende/überlappende Abstützstruktur weiterleiten. Insofern ist das konstruktive Konzept der Zug-Drehmomentabstützung auch vergleichsweise variabel und leicht skalierbar, sei es größentechnisch, sei es bezüglich der zu übertragenden Drehmomente. Eine Anbindung an der axial überlappenden Abstützstruktur (Umgebungskonstruktion, das zweite Gehäuse zumindest teilweise umgebend) kann dabei flexibel/variabel an verschiedenen Stellen bzw. Umfangs- und Axialpositionen realisiert werden und ist auch derart ausführbar, dass die resultierenden Lasten für einen positiven Einfluss auf das Betriebsverhalten des Getriebes generiert werden können. Beispielsweise kann durch geeignete Wahl des Materials der Zug-Drehmomentabstützung sowie deren Anbindung über Schwingungsentkoppler die Auswirkung einer gegebenenfalls aufgrund der Getriebeverzahnung generierten Anregung in die axial übergreifende/überlappende Abstützstruktur (Umgebungskonstruktion) auf einfache Weise reduziert werden.

Im Gegensatz dazu wären basierend auf den bisher gemäß dem Stand der Technik verfügbaren Lösungen viele Schraubverbindungen mit hoher Vorspannung nötig oder es würde alternativ eine sehr aufwändige Reib-/Formschluss-Kombination erforderlich werden, um das abzustützende Drehmoment reibschlüssig übertragen zu können. Auch diese Nachteile können durch die vorliegende Erfindung überwunden werden.

Die erfindungsgemäße Zug-Drehmomentabstützung kann das Abstützdrehmoment von Getrieben mittels einer riemen-, band- oder seilartigen Kopplung, welche im Wesentlichen Zugkräfte aufnimmt und überträgt (also keine Druckkräfte, keine Drehmomente), in eine/die axial übergreifende/überlappende Abstützstruktur (Umgebungskonstruktion) transferieren bzw. ableiten. Die Zug-Drehmomentabstützung wird vorteilhaft so ausgeführt, dass an mehreren Stellen über dem Umfang und/oder an mehreren axialen Positionen entlang der Getriebe- und/oder Generatorlängsachse und/oder an mehreren Stellen am Durchmesser verteilt (also in unterschiedlichen Radialpositionen), das Abstützdrehmoment abgegriffen und ausgeleitet wird. Durch einen vorteilhaft gewählten Umschlingungswinkel der riemen-, band- oder seilartigen Kopplung und bevorzugt auch in Verbindung mit einem angepassten Reibungskoeffizienten zwischen den Oberflächen bzw. Materialien von Getriebe und Zug-Drehmomentabstützung kann die Einzelanbindungskraft weiter reduziert werden. Durch eine Ausgestaltung und Form der zugmittelbasierten Kopplung der Zug-Drehmomentabstützung, z.B. unter Verwendung von Keil- oder Zahnriemen, wird eine jeweilige Einzelanbindungskraft mit der entsprechenden Gegenform (Reaktionskraft) am Getriebe ebenfalls reduziert und über dem Umfang verteilt aufgebracht, insbesondere bei vorteilhaft skalierter Anzahl von Zugmitteln.

Beispielsweise leitet die Zug-Drehmomentstütze in der Anwendung an einem Planetengetriebe (bzw. zwischen Planetengetriebe und Lagergehäuse) die Haltekraft nahe am vorhandenen (Anschluss-)Durchmesser des Hohlrades ab (insbesondere ohne dass Bauraumvergrößerungen erforderlich werden) und erzeugt daher auch keine zusätzliche Biegebeanspruchung in der Getriebestruktur. Auch für den Transport des jeweiligen Getriebes ist dank der erfindungsgemäßen Zug-Drehmomentabstützung keine nachteilige Bauraumvergrößerung zu berücksichtigen, so dass auch der Transport in technischer Hinsicht vorteilhafter und auch kostengünstiger ausgestaltet werden kann; dies ist zwar eher nur als marginaler Vorteil (positiver Nebeneffekt) zu erwähnen, kann sich jedoch insbesondere mit sehr starken voluminösen Triebsträngen, die beispielsweise auch in großer Höhe montiert werden müssen (z.B. innerhalb einer Gondel einer Windenergieanlage), als sehr vorteilhaft erweisen.

Die erfindungsgemäße Zug-Drehmomentabstützung kann das Abstütz-Drehmoment an mehreren Stellen über den Umfang des Getriebes verteilt abgreifen und an die Umgebungskonstruktion (insbesondere axial übergreifende/überlappende Abstützstruktur) weiterleiten. Durch eine vorteilhafte Ausgestaltung der Zug-Drehmomentabstützung mit Zugmitteln z.B. in Form von Riemen (Flach-, Keil-, Zahnriemen), insbesondere in Verbindung mit einem ausreichend großen Reibwert und Umschlingungswinkel bzw. einer entsprechend effizienten Kraft- und wahlweise auch Formschlussverbindung zwischen Zugmittel und entsprechender Triebstrang-Komponente, kann die Anbindungskraft reduziert und vorteilhat über den Umfang des zweiten Gehäuses verteilt werden. Die Anbindung an der Umgebungskonstruktion (bzw. an die axial übergreifende/überlappende Abstützstruktur) ist dabei flexibel an verschiedenen Stellen möglich und ist derart ausführbar, dass die resultierenden Lasten einen positiven Einfluss auf das Betriebsverhalten des Getriebes haben. Ebenso ist eine anwendungsspezifische Anpassung auf die Umgebungskonstruktion bei nahezu gleichem Getriebedesign möglich und reduziert damit den ingenieurstechnischen Anpassungs-Aufwand für individuelle Lösungen.

Bisherige Drehmomentstütze, insbesondere solche unter Nutzung von Drucklasten und Erzeugung von Biegebeanspruchung in der Stütze, erforderten üblicherweise eine deutliche Vergrößerung der Bauraumabmessungen des Getriebes, was sowohl bei Transportvorgängen zu Einschränkungen bzw. Mehrkosten führt sowie bei der Anwendung als solcher durch Platzrestriktionen zu Nachteilen und Einschränkungen beispielsweise hinsichtlich des Planentenhohlraddurchmessers führen kann. Des Weiteren erhöhte sich bei massiven Drehmomentstützen bisher nachteiliger Weise auch das Gewicht des Getriebes. Im Falle der Flanschanbindung lässt eine direkte Ankopplung keine einfache Schwingungsentkopplung zu; insbesondere sind/waren bisher viele Schraubverbindungen nötig, um das abzustützende Drehmoment reibschlüssig übertragen zu können oder aufwändig über eine Kombination mit formschlüssigen Verbindungen übertragen zu können.

Es hat sich gezeigt, dass die erfindungsgemäße Anordnung insbesondere auch für Dreipunkt-Rotorlagerungen vorteilhaft realisierbar ist, für welche auch eine Abstützung an die Umgebungsstruktur zu empfehlen ist. Die Erfindung ermöglicht diesbezüglich auch eine drehmomentabhängige Kompensation von Kippmomenten und Gewichtskräften.

Eine beispielhafte Ausgestaltung einer vorteilhaften Anbindung des Getriebes an die benachbarte Struktur wie z.B. das Rotorlagergehäuse und/oder einen Maschinenträger wird auch in den beiliegenden Figuren näher erläutert.

Personifizierte Begriffe, soweit sie hier nicht im Neutrum formuliert sind, können im Rahmen der vorliegenden Offenbarung alle Geschlechter betreffen. Etwaige hier verwendete englischsprachige Ausdrücke oder Abkürzungen sind jeweils branchenübliche Fachausdrücke und sind dem Fachmann in englischer Sprache geläufig. Etwaige dazu synonym verwendete/verwendbare deutschsprachige Begriffe können hier der Vollständigkeit halber in (Klammern) angegeben werden, oder vice versa.

Sofern gemäß der vorliegenden Offenbarung bezüglich des Getriebes auf eine axiale Richtung abgestellt wird, bezieht sich dies auf die bestimmungsgemäße Erstreckung der (Ein- oder Ausgangs-)Welle in Einbaulage, insbesondere in horizontaler Ausrichtung oder leicht nach unten/hinten geneigt (z.B. bei winkelig relativ zur Vertikalebene leicht angestelltem Rotor einer Windenergieanlage), bei welcher die Mittellinien bzw. die Drehachse der jeweiligen Getriebekomponente und der Leistungswelle in axialer Richtung ausgerichtet sind, insbesondere zumindest annähernd orthogonal zur Schwerkraftrichtung.

Die zuvor genannte Aufgabe kann auch insofern gelöst werden durch eine/die hier beschriebene Zug-Momentenabstützung mit den Merkmalen einer/der hier beschriebenen Zug-Drehmomentabstützung, und umgekehrt. Insofern ermöglicht die erfindungsgemäße Art und Weise der Abstützung wahlweise den Fokus auf eine Umschlingung mittels Zugmitteln an Außenmantelflächen zu richten, und dabei wahlweise auch einen Großteil von Gewichtskräften bzw. Kippmomenten aufzufangen (so genannte Zug-Drehmomentabstützung), oder die Zugmittel werden an sich gegenseitig axial überlappenden Gehäuseabschnitten, insbesondere Zapfen vorgesehen, wobei optional auch eine Vorspanneinheit zum Aufbringen einer im Wesentlichen axial wirkenden Aufrichtkraft vorgesehen werden kann (so genannte Zug-Momentenabstützung). Das erfindungsgemäße Konzept liefert insofern auch einen sehr variablen zugmittelbasierten Ansatz zur optimierten Abstützung in Triebsträngen.

Gemäß einem Ausführungsbeispiel ist die Weiterleitung der auf die Zug-Drehmomentabstützung ausgeübten Reaktionskräfte ausschließlich zugmittelbasiert. Dies begünstigt nicht zuletzt auch eine funktionale Integration einer Schwingungsentkopplung.

Gemäß einem Ausführungsbeispiel erfolgt eine Kraftübertragung vom zweiten auf das erste Gehäuse ausschließlich mittels des wenigstens einen Zugmittels. Dies ermöglicht nicht zuletzt auch eine große Variabilität und Flexibilität hinsichtlich Individualisierungen und Skalierung.

Gemäß einem Ausführungsbeispiel ist die Zug-Drehmomentabstützung über eine Abstützstruktur abgestützt ist, welche mittelbar/indirekt mit dem zweiten Gehäuse verbunden ist oder integral einstückig am zweiten Gehäuse vorgesehen ist, beispielsweise angegossen ist. Die Abstützstruktur kann dabei wahlweise auch die wesentliche oder sogar ausschließliche Stützstruktur zwischen erstem und zweitem Gehäuse für die hier beschriebene Art und Weise der Abstützung bzw. Kraftweiterleitung sein. Wahlweise umfasst die Abstützstruktur auch wenigstens eine (weitere) Stützkomponente, welche an einen/den Maschinenträger (Basis) gekoppelt/koppelbar ist. Wahlweise ist die Abstützstruktur integraler (Bestand-)Teil des ersten Gehäuses und/oder des zweiten Gehäuses (insbesondere auch in Abhängigkeit davon, welches Gehäuse den größeren Durchmesser bzw. Anschlussdurchmesser aufweist, beispielsweise ausschließlich Bestandteil des ersten Gehäuses).

Gemäß einem Ausführungsbeispiel umfasst die Zug-Drehmomentabstützung eine Mehrzahl von Zugmitteln, welche jeweils sowohl am zweiten Gehäuse als auch zumindest mittelbar (insbesondere über eine/die Abstützstruktur, wahlweise auch direkt) am ersten Gehäuse befestigt sind und den Kraftflusspfad vom zweiten auf das erste Gehäuse definieren. Dies ermöglicht nicht zuletzt auch eine Auslegung der Art und Weise der Kopplung über das Material, die Anzahl, die Befestigungspunkte und/oder die Stärke der Zugmittel.

Gemäß einem Ausführungsbeispiel umfasst die Zug-Drehmomentabstützung eine Mehrzahl von Zugmitteln, welche derart zwischen dem ersten und dem zweiten Gehäuse kraftübertragend gekoppelt sind, dass die Zug-Drehmomentabstützung eingerichtet ist zur drehmomentabhängigen Kompensation von Kippmomenten und Gewichtskräften ohne aufrichtendes Axiallastpaar. Dies erweitert nicht zuletzt auch die mittels der Zugmittel realisierbare funktionelle Integration in einen vergleichsweise einfachen und kompakten konstruktiven Aufbau.

Gemäß einem Ausführungsbeispiel umfasst die Zug-Drehmomentabstützung eine Mehrzahl von Zugmitteln, welche beidseitig in entgegengesetzten Umfangsrichtungen vom zweiten Gehäuse abgehen und in entgegengesetzten Umfangsrichtungen gegensätzlich zwischen dem zweiten und ersten Gehäuse wirken, insbesondere zum Aufbringen sowohl einer ersten nach oben gerichteten Zugkraft als auch einer ersten nach unten gerichteten Zugkraft. Dies liefert nicht zuletzt auch gute Einstellmöglichkeiten in Hinblick auf eine Zugvorspannung, z.B. auch hinsichtlich einer Kompensation von Kippmomenten und/oder Gewichtskräften.

Gemäß einem Ausführungsbeispiel definiert das zweite Gehäuse Befestigungspunkte, an welchen das wenigstens eine oder jeweilige Zugmittel fixierbar/fixiert ist, insbesondere in derartiger Anordnung, dass das jeweilige Zugmittel bei bestimmungsgemäßer Winkelposition des Triebstrangs über einen vordefinierten/vordefinierbaren Umschlingungs-/Umfangswinkel um eine/die Außenmantelfläche des Gehäuses gelegt ist, insbesondere mit einem Umschlingungs-/Umfangswinkel von mindestens 90°, bevorzugt mindestens 125°. Dies begünstigt auch eine Kraftübertragung über Reibschluss, wobei die jeweilige Komponente des Triebstrangs auch hinsichtlich Gewichtskräften oder Kippmomenten vom jeweiligen Zugmittel gestützt werden kann. Der Umschlingungs-/Umfangswinkel kann wahlweise auch über 360° betragen, also mehr als eine komplette vollumfängliche Umschlingung.

Gemäß einem Ausführungsbeispiel ist das wenigstens eine Zugmittel im Wesentlichen in einer einzigen Ebene angeordnet, welche sich orthogonal zur axialen Ausrichtung der Welle erstreckt, also im Wesentlichen in einer zugmittelspezifischen Radialebene. Dies begünstigt nicht zuletzt auch eine Kraftübertragung auf einem Kraftflusspfad, welcher nicht oder allenfalls marginal in axialer Richtung ausgerichtet ist.

Das jeweilige Zugmittel wird vorteilhaft mit einem vordefinierten Umschlingungswinkel um den Triebstrang bzw. um das zweite Gehäuse gelegt, insbesondere derart, dass die Kraft im Zugmittel eine Klemmung des Anfangs und/oder Endes des Zugmittels am korrespondierenden Bauteil (Abstützstruktur oder zweites Gehäuse oder Generator) unterstützt, z.B. basierend auf einer Keilwirkung in Verbindung mit einem Hebelarm; wahlweise kann das Zugmittel an der entsprechenden Befestigungsstelle auch stoffschlüssig angebunden sein, z.B. verklebt sein, oder auch mit einem im Zugmittel integriertem Körper formschlüssig am korrespondierenden Bauteil fixiert sein.

Gemäß einem Ausführungsbeispiel ist die Zug-Drehmomentabstützung unabhängig von rotierenden Komponenten am ersten Gehäuse abgestützt (insbesondere unabhängig von der Welle, unabhängig von einer gegebenenfalls an der Welle vorgesehenen Kupplung und unabhängig von der wenigstens einen Getriebekomponente), also an nicht-rotierenden Komponenten. Eine derartige Abstützung begünstigt auch eine funktionale Erweiterung bzw. Integration hinsichtlich einer Gewichtskraft- und/oder Kippmomentenabstützung.

Gemäß einem Ausführungsbeispiel weist das erste Gehäuse eine axial übergreifende/überlappende Abstützstruktur auf, insbesondere in einer Anordnung radial außen vom zweiten Gehäuse, über welche die Kraftweiterleitung seitens der Zug-Drehmomentabstützung erfolgt. Hierdurch kann nicht zuletzt auch eine vorteilhafte Anbindung des jeweiligen Zugmittels erfolgen, insbesondere in einer zumindest annähernd orthogonal zur axialen Erstreckung des Triebstrangs verlaufenden Radialebene. Die Abstützstruktur kann dabei wahlweise auch einen/den Generator axial überlappen. Wahlweise umfasst die Abstützstruktur auch wenigstens eine Stützkomponente, die mit der Basis verbunden ist, insbesondere dann, wenn große Gewichtskräfte aufgenommen werden sollen oder Verbindungsflansche oder Kupplungen zwischen den Triebstrangkomponenten entlastet werden sollen.

Gemäß einem Ausführungsbeispiel ist wenigstens eine das zweite Gehäuse zumindest teilweise axial übergreifende/überlappende Abstützstruktur am ersten Gehäuse vorgesehen, insbesondere in stoffschlüssiger Befestigung oder in integral-einstückiger Ausgestaltung, an welcher das wenigstens eine Zugmittel befestigt ist. Hierdurch kann die Kraftweiterleitung über das erste Gehäuse auch auf vergleichsweise robuste und exakt vordefinierte Weise erfolgen, insbesondere bei exakt vorbestimmter bzw. vorausberechneter Kraftverteilung auch in den Abstützbereichen am ersten Gehäuse.

Gemäß einem Ausführungsbeispiel ist wenigstens eine das zweite Gehäuse zumindest teilweise axial übergreifende/überlappende Abstützstruktur am ersten Gehäuse vorgesehen, welche am ersten Gehäuse in wenigstens drei Abstützpunkten/-bereichen abgestützt ist, insbesondere umfassend lateral unterhalb und/oder oberhalb der Mittenlängsachse des Treibstrangs gegenüberliegend voneinander angeordnete Abstützpunkte/-bereiche. Hierdurch kann beispielsweise eine erste einseitig lateral nach oben wirkende Reaktionskraft (auf das zweite Gehäuse) und zwei zweite beidseitig lateral nach unten wirkende Reaktionskräfte (auf das zweite Gehäuse) bereitgestellt werden, insbesondere bei gegeneinander wirkender Vorspannung der nach unten abgestützten Zugmittel; beispielsweise ist ein Abstützpunkt/-bereich lateral oberhalb der Mittenlängsachse angeordnet, und zwei Abstützpunkte/- bereiche sind lateral unterhalb der Mittenlängsachse gegenüberliegend voneinander angeordnet. Die hier beispielhaft genannte Anzahl von wenigstens drei Abstützpunkten/-bereichen kann je nach spezifischer Anwendung und Ausgestaltung der aneinander abzustützenden Komponenten auch kleiner oder größer sein, z.B. zwei oder vier oder fünf Abstützpunkte/-bereiche. Dabei können an den einzelnen Abstützpunkten/-bereichen auch mehrere Zugmittel angreifen, z.B. bei nur einem oberhalb der Mittenlängsachse des Triebstrangs angeordneten Abstützpunkt/-bereich wenigstens zwei Zugmittel, die an unterschiedlichen Axialpositionen am Triebstrang zwischen ersten und zweitem Gehäuse oder Generator kuppeln bzw. gekoppelt sind.

Die axial übergreifende/überlappende Abstützstruktur ist beispielsweise am ersten Gehäuse angegossen, also integral einstückig damit ausgestaltet. Wahlweise kann auch eine Verschraubung oder formschlüssige Verstiftung erfolgen. Die Abstützstruktur besteht bevorzugt aus einem Gussmaterial. In den jeweiligen Abstützpunkten/-bereichen weist die Abstützstruktur bevorzugt eine vergleichbare bzw. eine homogene Steifigkeit auf.

Das jeweilige Zugmittel ist/wird vorteilhaft mit einem günstigen Mindest-Umschlingungswinkel am (jeweiligen) Ende befestigt, insbesondere auch an der Abstützstruktur bzw. an einem entsprechenden Strukturbauteil, insbesondere derart, dass die Zugkraft im Zugmittel eine Klemmung des entsprechenden Endes des Zugmittels in der Befestigungsstelle unterstützt, z.B. eingepresst mittels Keilen und/oder mittels eines Hebelarms die Klemmkraft unterstützend. Das (jeweilige) Zugmittel kann wahlweise auch ohne Umschlingung in einer Klemmvorrichtung aufgenommen werden. Ferner kann das entsprechende Ende des jeweiligen Zugmittels auch stoffschlüssig im korrespondierenden Befestigungsbereich befestigt/verklebt sein und/oder mit einem im Zugmittel integrierten Körper im Wesentlichen formschlüssig befestigt sein. Der Fachmann kann für einen jeweiligen Anwendungsfall zu bevorzugende Befestigungsarten identifizieren.

Die axial übergreifende/überlappende Abstützstruktur muss nicht notwendigerweise ausschließlich durch das erste Gehäuse bereitgestellt sein, jedoch hat sich diese Art und Weise der Abstützung für viele Anwendungen als vorteilhaft erwiesen, beispielsweise auch bei vergleichsweise robusten Rotorlagerungen von Windenergieanlagen. Wahlweise kann die axial übergreifende/überlappende Abstützstruktur auch mittelbar/indirekt an das erste Gehäuse angebunden sein, so dass der Kraftfluss zumindest teilweise (nicht notwendigerweise ausschließlich) über das erste Gehäuse erfolgt. Beispielsweise ist zusätzlich auch ein Rahmen (insbesondere geschweißt) vorgesehen, an welchem wenigstens eines der Zugmittel zumindest teilweise abgestützt bzw. umgelenkt oder anderweitig befestigt sein kann.

Die Anzahl von bevorzugt wenigstens zwei oder drei Abstützpunkten/-bereichen kann vom Fachmann anwendungsspezifisch optimiert werden, insbesondere derart, dass mittels der Zugmittel eine drehmomentabhängige Gewichtskraftentlastung nach oben sichergestellt ist. **In** Abhängigkeit des Ausmaßes einer axialen Überlappung können die Befestigungspunkte der Zugmittel dabei auch derart festgelegt sein/werden, dass etwaige Flanschverbindungen zwischen Generator und Getriebe oder zwischen einzelnen Getriebestufen entlastet werden.

Gemäß einem Ausführungsbeispiel umfasst die Zug-Drehmomentabstützung eine Mehrzahl von Zugmitteln, welche in unterschiedlichen Axialpositionen an das zweite Gehäuse und wahlweise auch an einen/den an das zweite Gehäuse gekuppelten Generator angebunden sind und zumindest einer relativen Drehbewegung des zweiten Gehäuses relativ zum ersten Gehäuse durch Aufbringen zumindest einer nach oben und/oder in Umfangsrichtung gerichteten Zugkraft entgegenwirken. Dies ermöglicht nicht zuletzt auch eine sehr wirkungsvolle Abstützung bei über einen vergleichsweise großen Längenabschnitt frei im Raum ohne Abstützung nach unten angeordneten Triebstrangkomponenten insbesondere umfassend einen/den Generator.

Gemäß einem Ausführungsbeispiel ist unterhalb des zweiten Gehäuses und wahlweise auch unterhalb eines/des an das zweite Gehäuse gekuppelten Generators ein Freiraum vorgesehen, über welchem das zweite Gehäuse und gegebenenfalls auch ein/der daran gekuppelte Generator abstützfrei über einem/dem Maschinenträger frei im Raum angeordnet sind, insbesondere mit Bewegungsfreiheitsgrad zumindest nach unten. Diese Anordnung wird nicht zuletzt auch durch eine Abstützung ausschließlich mittels der Zugmittel ausschließlich am ersten Gehäuse ermöglicht, beispielsweise dann, wenn eine Abstützung am Maschinenträger nicht erfolgen kann oder belastungstechnisch nicht sinnvoll wäre.

Das wenigstens eine Zugmittel ist riemen-, band- oder seilartig ausgestaltet, beispielsweise als Keil- oder Zahnriemen. Dies begünstigt nicht zuletzt auch einen Kraft-/Reibschluss an einer Außenmantelfläche der jeweiligen Komponente des Triebstrangs; je nach Ausgestaltung der jeweiligen Außenmantelfläche kann der Fachmann eine geeignete bzw. im jeweiligen Anwendungsfall besonders adäquate Paarung von Zugmittel-Typ und Oberfläche (wahlweise auch formschlüssig) wählen und wahlweise auch eine entsprechend vorteilhafte Formgebung an der korrespondierenden Außenmantelfläche vorsehen. Insbesondere bei großer Leistungsdichte eines Triebstrangs sind robuste und hochfeste Zugmittelmaterialien von Nutzen, z.B. Polymerfasern insbesondere in Form von multifibrillären (multifaserigen) Polyacrylnitrilfasern; oder es können Zugmittel bestehend aus oder basierend auf Aramid zum Einsatz kommen; oder Polyester-Verbund-Riemen oder hochfeste Chemiefaserverbünde aus Polyethylen wie z.B. synthetische Chemiefasern auf Polyethylen-Basis mit sehr hoher Molekülmasse (so genanntes Dyneema bzw. PE-UHMW).Dabei kommt das wenigstens eine Zugmittel zumindest kraft-/reibschlüssig und wahlweise auch formschlüssig an einer/der Außenmantelfläche zumindest des zweiten Gehäuses zur Anlage. Diese Variationsmöglichkeit begünstigt nicht zuletzt auch eine Optimierung von elastischen oder Vorspann-Eigenschaften insbesondere in Abhängigkeit von den einzelnen Längenabschnitten des jeweiligen Zugmittels (freie Länge, Kontaktlänge).

Gemäß einem Ausführungsbeispiel ist mittels des wenigstens einen Zugmittels eine Schwingungsentkopplung zwischen dem zweitem Gehäuse (oder/bzw. der Getriebekomponente) und dem erstem Gehäuse (oder/bzw. dem Lager der Welle) sichergestellt, insbesondere indem das wenigstens eine Zugmittel aus einem gut dämpfenden Material wie z.B. Polyurethan oder einem sehr flexiblen und elastischen Material wie z.B. Polyamid oder aus einem hochfesten und dabei auch vergleichsweise elastischen Material z.B. auf Polyethylen-Basis ausgeführt ist. Dies begünstigt nicht zuletzt auch einen synergetischen Effekt hinsichtlich der hier beschriebenen potentiell zahlreichen Funktionen der Zugmittel, je nach im Anwendungsfall gewünschtem funktionellem Umfang.

Ein weiterer Aspekt der Erfindung betrifft auch eine Triebstranganordnung für Industriegetriebe, insbesondere zur Anbindung an einen Rotor einer Windenergieanlage, aufweisend: ein erstes Gehäuse, welches eine Lagerung für eine Welle des Triebstrangs umgibt, eine insbesondere axial fluchtend an die Welle gekuppelte/gekoppelte Getriebekomponente, welche von einem zweiten Gehäuse umgeben ist, sowie eine Zug-Momentenabstützung umfassend wenigstens ein das erste und zweite Gehäuse miteinander koppelndes Zugmittel, wobei die Zug-Momentenabstützung einem auf die Welle oder die daran gekoppelte Getriebekomponente wirkenden Drehmoment entgegenwirkt; wobei die Zug-Momentenabstützung zur Weiterleitung der auf das wenigstens eine Zugmittel ausgeübten Reaktionskräfte am ersten Gehäuse abgestützt ist, insbesondere ausschließlich zugmittelbasiert. Dies begünstigt nicht zuletzt auch eine kombinierte Abstützung auch von Kippmomenten.

Gemäß dem weiteren Aspekt können insbesondere auch die folgenden Merkmale vorteilhaft realisiert sein/werden, insbesondere stirnseitig im Bereich axial überlappender Zapfen der beiden Gehäuse.

Die Zug-Momentenabstützung kann eine Mehrzahl von Zugmitteln umfassen, welche zwischen Zapfen oder dergleichen hervorgestehenden Abschnitten des zweiten Gehäuses oder der Getriebekomponente und Zapfen oder dergleichen hervorgestehenden Abschnitten des ersten Gehäuses vorgesehen sind, insbesondere jeweils schlaufenartig zwischen jeweils paarweise korrespondierenden Zapfen des ersten und zweiten Gehäuses, insbesondere jeweils in Ausgestaltung als vollständig umlaufendes Endlos-Zugmittel, insbesondere jeweils in ein- oder mehrlagig übereinander liegender Anordnung.

Die Zug-Momentenabstützung kann eine Mehrzahl von Zugmitteln umfassen, welche sich sowohl in einer ersten Zugmittelrichtung, insbesondere in der durch das eingangsseitig am Triebstrang wirkende Drehmoment definierten Betriebs-/Energieerzeugungsrichtung (Hauptrichtung), als auch in einer zweiten Zugmittelrichtung, insbesondere in Reversier-/Bremsbetriebsrichtung (Nebenrichtung) erstrecken.

Die Zug-Momentenabstützung kann eine Mehrzahl von ersten Zugmitteln umfassen, welche sich in einer ersten Zugkraftrichtung (Zugkrafthauptrichtung) entgegen einem ersten um die axiale Ausrichtung des Triebstrangs wirkenden Drehmoment erstrecken, und wobei die Zug-Momentenabstützung eine Mehrzahl von zweiten Zugmitteln umfasst, welche sich in einer zweiten Zugkraftrichtung (Zugkraftgegenrichtung, Zugkraftnebenrichtung) entgegen einem zweiten um die axiale Ausrichtung des Triebstrangs wirkenden Drehmoment erstrecken, wobei das erste Drehmoment bei bestimmungsgemäßem Einsatz des Triebstrangs größer ist als das zweite Drehmoment, und wobei die ersten Zugmittel entsprechend dimensioniert sind (also größer oder robuster oder steifer sind als die zweiten Zugmittel).

Das erste und zweite Gehäuse können in der Art einer Klauenkupplung ineinandergreifen, insbesondere mittels axial überlappender Zapfen oder dergleichen axial hervorstehender Abschnitte, an welchen die jeweiligen Zugmittel angreifen.

Die Weiterleitung der auf die Zug-Momentenabstützung um die Welle bzw. um die axiale Richtung ausgeübten Drehmomente und daraus entsprechend resultierender Reaktionskräfte ist bevorzugt ausschließlich zugmittelbasiert.

Die Zug-Momentenabstützung kann ferner wenigstens eine Vorspanneinheit eingerichtet und angeordnet zum Aufbringen und Übertragen einer einem schwerkraftbegründeten Kippmoment entgegenwirkender Aufrichtkraft auf das zweite Gehäuse aufweisen, insbesondere in einer Anordnung zwischen einer Außenmantelfläche des ersten und zweiten Gehäuses.

Die Zug-Momentenabstützung kann eine/die Vorspanneinheit aufweisen, welche funktional von der Wirkung des wenigstens einen Zugmittels entkoppelt ist, insbesondere indem die Vorspanneinheit im Wesentlichen in axialer Richtung zwischen den Gehäusen wirkt und das oder die Zugmittel zur Drehmomentübertragung im Wesentlichen nur in Umfangs- und/oder Radialrichtung zwischen den Gehäusen wirkt/wirken.

Die Vorspanneinheit kann bevorzugt in einem oberen Umfangssegment am ersten und zweiten Gehäuse angreifen und eine/die Aufrichtkraft übertragen. Die Vorspanneinheit kann wenigstens ein elastisch vorspannbares Vorspannelement, insbesondere eine mechanische Feder, und/oder wenigstens einen hydraulischen oder elektrischen Aktuator umfassen. Die Vorspanneinheit kann wenigstens ein elastisch vorspannbares Vorspannelement umfassen, welches in Verbindung mit einer/der Elastizität der Zugmittel (insbesondere aufgrund initialer Dehnung bei Montage) wirkt und eine drehmomentabhängige Vorspannungskraft liefert. Eine solche Vorspanneinheit kann wahlweise unabhängig von oder in Verbindung mit den Zugmitteln (oder zumindest einer Teilmenge der wirksamen Zugmittel) vorgesehen und einstellbar sein.

Unterhalb des zweiten Gehäuses und wahlweise auch unterhalb eines/des an das zweite Gehäuse gekuppelten Generators kann ein Freiraum vorgesehen sein, über welchem das zweite Gehäuse und gegebenenfalls auch ein/der daran gekuppelte Generator abstützfrei über einem/dem Maschinenträger frei im Raum angeordnet sind, insbesondere mit Bewegungsfreiheitsgrad zumindest nach unten.

Das wenigstens eine Zugmittel ist riemen-, band- oder seilartig ausgestaltet, insbesondere als Flachriemen.

Das wenigstens eine Zugmittel kann zumindest kraft-/reibschlüssig und wahlweise auch formschlüssig an einer/der Mantelfläche von Zapfen oder dergleichen hervorstehenden Abschnitten des ersten und zweiten Gehäuses zur Anlage kommen.

Mittels des wenigstens einen Zugmittels kann eine Schwingungsentkopplung zwischen erstem und zweitem Gehäuse (oder/bzw. zwischen Getriebekomponente und Lagerkomponente oder Welle) sichergestellt sein/werden, insbesondere indem das wenigstens eine Zugmittel aus einem dämpfenden Material wie z.B. Polyurethan oder aus einem vergleichsweise flexiblen und elastischen Material wie z.B. Polyamid oder aus einem hochfesten und dabei auch vergleichsweise elastischen Material z.B. basierend auf Aramid oder Polyester oder Polyethylen oder Polymerfasern insbesondere in Form von multifibrillären (multifaserigen) Polyacrylnitrilfasern ausgeführt ist.

Ein Aspekt der Erfindung betrifft ferner ein Industriegetriebe, welches in einer solchen Triebstranganordnung verbaut ist oder diese Triebstranganordnung umfasst, insbesondere mit einem am zweiten Gehäuse befestigten und frei im Raum ohne Abstützung nach unten zur Basis angeordneten Generator. Die zuvor genannte Aufgabe wird insofern auch gelöst durch ein Industriegetriebe mit/in einer zuvor weiter oben beschriebenen Triebstranganordnung, insbesondere zum Abstützen von seitens einer Getriebekomponente wirkenden Drehmomenten ausschließlich mittels wenigstens eines Zugmittels. Hierdurch ergeben sich zuvor genannte Vorteile, insbesondere auch in Hinblick auf geringen Platzbedarf und hohe Individualisierbarkeit auch für sehr spezifische Anwendungen. Die zuvor genannte Aufgabe wird insofern auch gelöst durch eine Windenergieanlage mit einem solchen Industriegetriebe.

Die zuvor genannte Aufgabe wird insofern auch gelöst durch ein Verfahren gemäß dem entsprechenden nebengeordneten Verfahrensanspruch, nämlich durch ein Verfahren zum Einstellen einer Drehmomentstützung einer Triebstranganordnung eines Industriegetriebes, insbesondere bei einem von einem Rotor einer Windenergieanlage abgehenden Triebstrang, wobei ein eine Lagerung einer Welle des Triebstrangs umgebendes erstes Gehäuse gegen ein zweites Gehäuse gelagert ist/wird, welches eine an die Welle gekoppelte Getriebekomponente umgibt, wobei mittels einer Zug-Momentenabstützung oder Zug-Drehmomentabstützung, welche einem auf die Welle oder die daran gekoppelte Getriebekomponente wirkenden Drehmoment entgegenwirkt, eine/die Drehmomentstützung des zweiten Gehäuses und damit der Getriebekomponente am ersten Gehäuse durch Aufnahme und Weiterleitung von ausschließlich Zugkräften mittels wenigstens eines riemen-, band- oder seilartig ausgestalteten Zugmittels zumindest seitens des zweiten Gehäuses zumindest in das erste Gehäuse erfolgt, insbesondere bei einem Triebstrang mit am zweiten Gehäuse abgestützten Generator, insbesondere in einer zuvor weiter oben beschriebenen Triebstranganordnung oder im Allgemeinen in einem Industriegetriebe oder in einer Windenergieanlage, insbesondere auch bei/durch Verwendung einer zuvor weiter oben beschriebenen Anordnung von Zugmitteln. Hierdurch ergeben sich zuvor genannte Vorteile, insbesondere auch in Hinblick auf eine sehr variable Anpassbarkeit der Art und Weise der Abstützung je nach Einsatzbedingungen, z.B. durch adaptierte Vorspannung in den Zugmitteln auch in Hinblick auf zeitweise hohe Kippmomente.

Die zuvor genannte Aufgabe wird kann auch gelöst werden durch ein solches Verfahren, indem auch eine Vorspannung wenigstens eines Zugmittels und/oder wenigstens einer in axialer Richtung wirkenden Vorspanneinheit (insbesondere um Aufbringen einer axial ausgerichteten und gegen die Gewichtskraft im Schwerpunkt wirkenden Aufrichtkraft) eingestellt und wahlweise auch aktiv geregelt wird. Dies ermöglicht auch eine noch gezieltere Anpassung an individuelle Belastungszustände.

Beispielsweise kann mittels wenigstens eines Kraft-/Weg-Sensors auf dem jeweiligen durch das/die Zugmittel definierten Kraftflusspfad ein momentaner Belastungszustand erfasst und in Abhängigkeit davon eine Einstellung der Komponenten der Zug-Momentenabstützung oder Zug-Drehmomentabstützung vorgenommen werden, beispielsweise hinsichtlich einer Vorspannung im jeweiligen Zugmittel oder hinsichtlich einer bilateralen Abstimmung der Wirkungsweise von gegenüberliegend und in entgegengesetzten Umfangsrichtungen angreifenden Zugmitteln. Dieses aktive Einstellen der Reaktionskräfte kann z.B. dann vorteilhaft implementiert sein/werden, wenn wenigstens eines der Zugmittel an einer Basis befestigt ist und dabei auch dann eine gleichbleibende Abstützkraft sichergestellt werden soll, wenn der Triebstrang eine Nickbewegung durchführt, z.B. aufgrund von auf einen im Durchmesser sehr großen Rotor ausgeübter Windlasten. Wahlweise kann z.B. auch ein Weg-/Abstandssensor für eine Weg-/Abstandsmessung zwischen Basis und Getriebe bzw. Generator (also in Höhenrichtung) vorgesehen sein, wobei diese Weg-Messdaten derart ausgewertet werden, dass z.B. über eine aktive angesteuerte Drehbewegung der Abstützstruktur die wirksame Zugmittellänge verkürzt oder verlängert wird und dadurch eine Vorspannung oder eine Dämpfung aktiv angepasst wird. Die Abstützstruktur kann beispielsweise um die eigene Achse drehbar am ersten Gehäuse befestigt sein, insbesondere derart, dass das jeweilige daran befestigte Zugmittel durch Drehung bzw. durch Veränderung der Winkelposition der Abstützstruktur vorgespannt werden könnte, im Sinne eines Vorspannens bzw. Nachspannens durch Aufspulen eines um die jeweilige Abstützstruktur gewickelten Zugmittels. Beispielsweise ermöglicht eine Kraftmessung im Kraftflusspfad des Zugmittels oder an den Befestigungsstellen zur Stützstruktur in Verbindung mit einem aktiven Stellglied eine gezielte Krafteinstellung beispielsweise mittels eines druckgesteuerten Hydraulikzylinders oder eines Elektromotors mit Kugelgewindetrieb, insbesondere in Verbindung mit entsprechend positionierten Beschleunigungsaufnehmern (Sensoren) in Nick-, Gier- oder Torsionsrichtung; auf diese Weise können auch Torsions- und/oder Biegeschwingungen im Triebstrang positiv beeinflusst werden und geringere Komponentenbelastungen bzw. niedrigere Geräuschemissionen erzielen werden.

Gemäß einer Ausführungsform erfolgt Aufnahme und Weiterleitung von ausschließlich Zugkräften in zumindest das erste Gehäuse mittels einer Mehrzahl von Zugmitteln, welche jeweils sowohl am zweiten Gehäuse als auch zumindest mittelbar am ersten Gehäuse befestigt sind und den Kraftflusspfad vom zweiten auf das erste Gehäuse definieren, wobei die Zugmittel bevorzugt derart zwischen dem ersten und dem zweiten Gehäuse kraftübertragend gekoppelt sind, dass zusätzlich auch eine drehmomentabhängige Kompensation von Kippmomenten und Gewichtskräften ohne aufrichtendes Axiallastpaar erfolgt. Dies begünstigt nicht zuletzt eine funktionelle Integration zum Bereitstellen zahlreicher Abstützfunktionen mittels der Zugmittel, insbesondere bei zusätzlicher Abstützung auch an einer Basis der Anordnung.

Die zuvor genannte Aufgabe wird auch gelöst durch Verwendung einer zuvor weiter oben beschriebenen Triebstranganordnung in einem Industriegetriebe, insbesondere in einer Windenergieanlage in einer Anordnung zwischen einem/dem Rotor der Windenergieanlage und einem/dem Generator der Windenergieanlage, insbesondere in einachsig fluchtender Anordnung/Ausrichtung des gesamten Triebstrangs, wobei mittels einer/der Zug-Momentenabstützung oder Zug-Drehmomentabstützung der Triebstranganordnung ausschließlich Zugkräfte zumindest von einem/dem Getriebegehäuse der Triebstranganordnung auf zumindest ein/das um eine/die Welle des Triebstrangs angeordnetes Rotorlagergehäuse zugmittelbasiert mittels wenigstens eines riemen-, band- oder seilartig ausgestalteten Zugmittels übertragen werden, bevorzugt mittels einer Mehrzahl von Zugmitteln, wobei das Getriebegehäuse und etwaige weitere daran angeflanschte/gekuppelte Komponenten wie z.B. ein Generator bevorzugt ausschließlich am Rotorlagergehäuse abgestützt ist/sind, bevorzugt mittels der Mehrzahl von Zugmitteln, insbesondere in einer zuvor weiter oben beschriebenen relativen Anordnung der Zugmittel zueinander und am ersten und zweiten Gehäuse. Hierdurch lassen sich zuvor genannte Vorteile realisieren, insbesondere auch in Hinblick auf das zusätzliche Abfangen und Weiterleiten von Kippmomenten und Gewichtskräften bei minimierter Beanspruchung des Triebstrangs und umgebender Komponenten.

### KURZE BESCHREIBUNG DER FIGUREN

In den nachfolgenden Zeichnungsfiguren wird die Erfindung noch näher anhand bevorzugter Ausführungsbeispiele exemplarisch beschrieben, wobei für Bezugszeichen, die nicht explizit in einer jeweiligen Zeichnungsfigur beschrieben werden, auf die anderen Zeichnungsfiguren verwiesen wird. Es zeigen:
**Figur 1** in einer stirnseitigen Ansicht von der Abtriebsseite gesehen eine Triebstranganordnung mit einer Zug-Drehmomentabstützung gemäß einem Ausführungsbeispiel in einer Einbausituation an einer Windenergieanlage;
**Figur 2** in einer teilweise geschnitten dargestellten Seitenansicht eine Triebstranganordnung gemäß einem Ausführungsbeispiel;
**Figur 3** in einer stirnseitigen Ansicht in axialer Richtung in isolierter Darstellung eine zusätzliche zugmittelbasierte Drehmomentstützung mittels an die Basis gekoppelter Zugmittel der Zug-Drehmomentabstützung gemäß einem weiteren Ausführungsbeispiel;
**Figur 4** in einer Seitenansicht eine Triebstranganordnung gemäß einem weiteren Ausführungsbeispiel;
**Figuren 5A, 5B** in einer Seitenansicht und in einer Draufsicht eine Triebstranganordnung gemäß einem weiteren Ausführungsbeispiel;
**Figur 6** in einer Seitenansicht einen Triebstrang gemäß dem Stand der Technik;

### DETAILLIERTE BESCHREIBUNG DER FIGUREN

Die Erfindung wird zunächst unter allgemeiner Bezugnahme auf alle Bezugsziffern und Figuren erläutert. Besonderheiten oder Einzelaspekte oder in der jeweiligen Figur gut sichtbare/darstellbare Aspekte der vorliegenden Erfindung werden individuell im Zusammenhang mit der jeweiligen Figur thematisiert.

Bereitgestellt wird eine Triebstranganordnung 10, welche eine Lagerung 4 für eine Welle 2 aufweist (insbesondere mit einer Zweipunkt-, Dreipunkt- oder Vierpunktlagerung oder Momentenlagerung mit z.B. Pendelrollenlagern oder vorgespannten Kegelrollenlagern), beispielsweise für eine Rotorwelle, an welche beispielsweise die Nabe 1 eines Rotors einer Windenergieanlage 100 gekuppelt ist. Die Lagerung 4 ist von einem ersten Gehäuse 13 umgeben (Rotorlagergehäuse). Der Triebstrang geht insbesondere über eine Kupplung 5 (insbesondere Flanschverbindung, Schrumpfverbindung, formschlüssige Steckverbindung, oder dergleichen) in eine Getriebekomponente 16 über (insbesondere umfassend wenigstens eine Planetengetriebestufe eines Industriegetriebes 20), wobei die Getriebekomponente 16 in einem zweiten Gehäuse 17 (Getriebegehäuse) angeordnet ist. Angrenzend an die Getriebekomponente kann ferner ein Generator 9 vorgesehen sein, insbesondere verbunden mit bzw. angeflanscht an das Getriebegehäuse. Insbesondere in einer Einbausituation auf einem Turm 102 einer Windenergieanlage wirken nicht nur große statische, sondern auch große dynamische Lasten auf den Triebstrang und auch auf die mechanischen Schnittstellen zum Turm, nicht zuletzt auch aufgrund von durch den Rotor der Windenergieanlage begründeten vergleichsweise großen Nickmomenten.

Auf den Triebstrang wirkt ein gegebenenfalls recht dynamisch anliegendes Eingangsdrehmoment **M**1 (beispielsweise generiert durch den Rotor einer Windenergieanlage), und es kann ein Ausgangsdrehmoment **M2** abgegriffen werden, beispielsweise durch einen/den axial fluchtend montierten Generator 9. Auch die Gewichtskraft g wirkt auf die einzelnen Komponenten des Triebstrangs und kann insbesondere im Bereich der Getriebekomponente oder des Generators ein recht hohes Biegemoment begründen. Ferner können insbesondere bei Windenergieanlagen aufgrund des großen Rotordurchmessers spürbare Kippmomente hervorgerufen werden. In diesem Zusammenhang liefert die vorliegende Erfindung eine vorteilhafte Maßnahme zum Abstützen der abtriebsseitig an die Welle 2 angebundenen Komponenten.

Die Triebstranganordnung 10 gemäß der vorliegenden Erfindung weist eine zugmittelbasierte Zug-Drehmomentabstützung 18 auf, welche eine Mehrzahl von Zugmitteln 18.1, 18.n umfasst, hier im Beispiel der Figuren wenigstens vier Zugmittel 18.1, 18.2, 18.3, 18.4. Wahlweise kann auch wenigstens ein weiteres Zugmittel 18.n insbesondere für eine zusätzliche Abstützung/Kraftweiterleitung zu einer Basis 101 (insbesondere einer Windenergieanlage) vorgesehen sein (insbesondere Abstützung in wenigstens einem weiteren Abstützpunkt/-bereich P4). Die einzelnen Zugmittel oder eine Teilmenge davon sind bevorzugt an wenigstens einer axial übergreifenden/überlappenden Abstützstruktur 13.1 befestigt, welche sich radial außen vom Getriebegehäuse in axialer Richtung erstreckt und am Lagergehäuse insbesondere in ersten und zweiten Abstützpunkten/-bereichen P1, P2 abgestützt ist

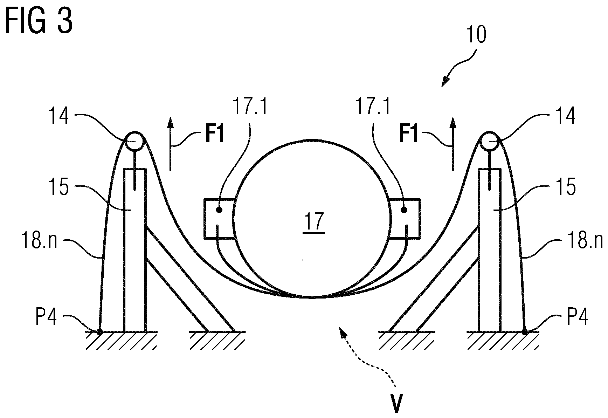

Die einzelnen Zugmittel können jeweils an einem Befestigungspunkt P3 am zweiten Gehäuse oder am Generator befestigt sein, insbesondere derart, dass das jeweilige Zugmittel über einen vorteilhaft großen Umschlingungs-/Umfangswinkel α am entsprechenden Außenmantelflächenabschnitt 9.3, 17.3 zur Anlage kommen kann. Auch an der Abstützstruktur 13.1 sind entsprechende Befestigungspunkte in vorteilhaften korrespondierenden Axialpositionen vorgesehen, insbesondere derart, dass das jeweilige Zugmittel in einer zugmittelspezifischen Radialebene Er ausgerichtet ist (keine axiale Kraftkomponente). Vorteilhafterweise ist der Triebstrang ab der Kupplung 5 (bzw. einer entsprechenden Schnittstelle zur Welle) derart frei schwebend angeordnet, dass sich unterhalb des Triebstrangs ein Freiraum, Freivolumen V bis zur Basis 101 realisieren lässt. Wahlweise kann in Einzelfällen auch eine zusätzliche Abstützung nach unten zur Basis erfolgen (Fig. 3).

Über einen oder mehrere auf dem jeweiligen Kraftflusspfad angeordnete Kraft-/Weg-Sensoren 19 kann eine Erfassung von Belastungszuständen erfolgen, wobei optional in Abhängigkeit von (momentanen) Belastungen auch eine Vorspannung oder dergleichen Parameter der Zugmittel eingestellt werden kann.

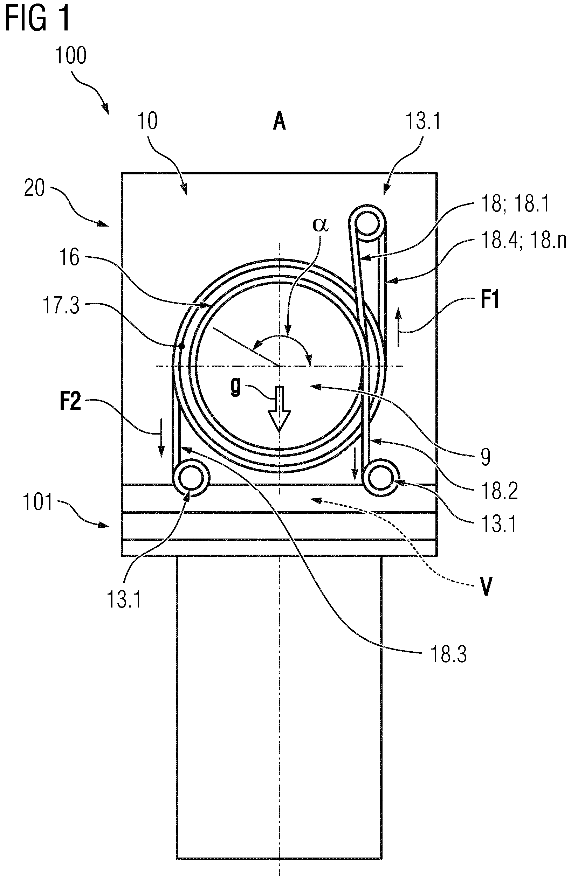

In **Fig. 1** ist (in stirnseitiger Ansicht **A**) eine zugmittelbasierte Zug-Drehmomentabstützung 18 umfassend vier in drei Abstützbereichen abgestützte Zugmittel 18.1, 18.2, 18.3, 18.4 gezeigt. Die einzelnen Zugmittel liegen mit einem Umschlingungs-/Umfangswinkel α im Bereich von ca. 120° bis 150° an der jeweiligen Außenmantelfläche an. Zwei der Zugmittel 18.2, 18.3 sind bilateral nach unten geführt und übertragen die Kraft **F2** (nach unten gerichtete Zugkraft), und zwei weitere der Zugmittel 18.1, 18.4 sind unilateral nach oben geführt und übertragen die Kraft F1 (nach oben gerichtete Zugkraft), welche im Wesentlichen dem (Differenz-)Drehmoment entgegenwirkt.

Aus Fig. 1 geht auch hervor, dass die Anbindung der Abstützstruktur an das erste Gehäuse (Abstützpunkte/-bereiche) je nach Anwendungsfall an verschiedene Stellen und Durchmessern und in verschiedenen Abstützrichtungen unten/oben/seitlich erfolgen kann, insbesondere derart, dass sich die resultierenden Kräfte zumindest teilweise kompensieren oder derart ergänzen, dass ungünstige Kraftkomponenten (z.B. nachteilige Auswirkungen der Gewichtskraft) eliminiert werden.

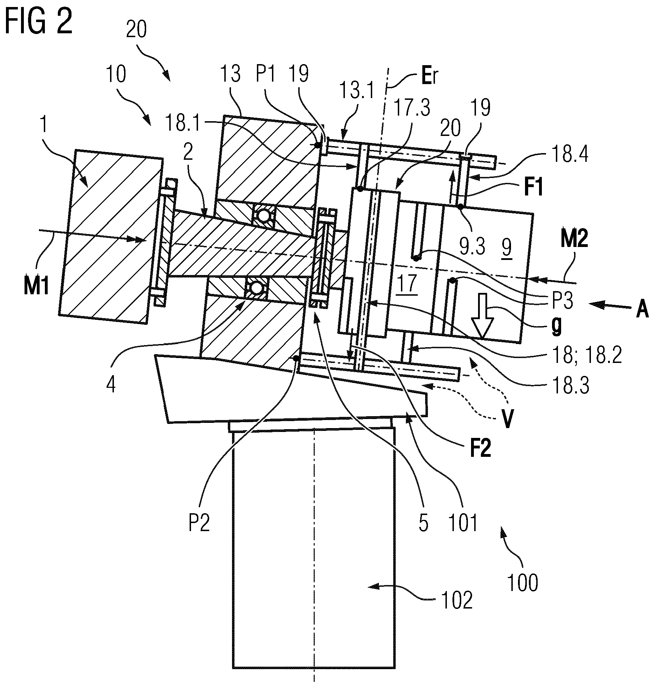

In **Fig. 2** ist die jeweilige Axialposition der einzelnen Zugmittel sowie deren Erstreckung in der entsprechenden Radialebene **Er** (insbesondere orthogonal zum leicht gekippten Triebstrang) dargestellt; auch an der Generatoraußenmantelfläche 9.3 liegt eines der Zugmittel 18.4 an. Die Abstützstruktur 13.1 erstreckt sich in axialer Richtung sowohl oberhalb als auch unterhalb der Getriebekomponente und des Generators und ist in den beiden Bereichen P1, P2 am Lagergehäuse 13 abgestützt (insbesondere in integral-einstückiger Anformung am Gehäuse 13). Somit erstreckt sich der Triebstrang ab der Kupplung 5 frei im Raum oberhalb des Freivolumens **V.**

In **Fig. 3** ist eine optional zusätzliche Abstützung gezeigt; die zugmittelbasierte Zug-Drehmomentabstützung 18 kann demnach auch wenigstens ein Zugmittel 18.n umfassen, welches an die Basis 101 gekoppelt ist, insbesondere bei über wenigstens eine Umlenkpunkt/-rolle 14 und wenigstens eine (weitere) Stützkomponente 15 geführtem Kraftflusspfad. In Fig. 3 wird auf die Getriebekomponente 17 Bezug genommen; die gezeigte Art und Weise der Anbindung kann alternativ oder zusätzlich auch für einen/den Generator realisiert sein. Die in Fig. 3 gezeigten radial vorstehenden Flanschelemente 17.1 oder dergleichen Kraftangriffskranz oder -segment oder Zapfen können dabei wahlweise auch bei den in Fig. 1, 2 gezeigten Außenmantelflächen der Getriebekomponente und des Generators vorgesehen sein.

Die in Fig. 3 illustrierte zugmittelbasierte Anbindung an die Basis (Maschinenträger) kann je nach Anwendung und Größe/Masse der Komponenten als zusätzlicher Aspekt in Kombination mit der zuvor insbesondere auch im Zusammenhang mit den Fig. 1, 2 beschriebenen zugmittelbasierten Anbindung an das erste Gehäuse (Lagergehäuse) kombiniert werden, insbesondere für Triebstränge, auf welche große Kippmomente und/oder Gewichtskräfte oder Gewichtskräfte bei besonders langem Hebelarm wirken.

In den folgenden Figuren wird ein weiterer Aspekt der vorliegenden Erfindung näher beschrieben, zunächst allgemein, dann unter spezifischer Bezugnahme auf die jeweilige Figur.

Bereitgestellt wird eine Triebstranganordnung 10, welche eine Lagerung 4 für eine Welle 2 aufweist (insbesondere mit einer Zweipunkt-, Dreipunkt- oder Vierpunktlagerung oder Momentenlagerung mit z.B. Pendelrollenlagern oder vorgespannten Kegelrollenlagern), beispielsweise für eine Rotorwelle, an welche beispielsweise die Nabe 1 eines Rotors einer Windenergieanlage 100 gekuppelt ist. Die Lagerung 4 ist von einem ersten Gehäuse 13 umgeben (Rotorlagergehäuse). Der Triebstrang geht vom ersten Gehäuse 13 in eine Getriebekomponente 16 über (insbesondere umfassend wenigstens eine Planetengetriebestufe eines Industriegetriebes 20), wobei die Getriebekomponente 16 in einem zweiten Gehäuse 17 (Getriebegehäuse) angeordnet ist. Angrenzend an die Getriebekomponente kann ferner ein Generator 9 vorgesehen sein, insbesondere verbunden mit bzw. angeflanscht an das Getriebegehäuse. Insbesondere in einer Einbausituation auf einem Turm 102 einer Windenergieanlage wirken nicht nur große statische, sondern auch große dynamische Lasten auf den Triebstrang und auch auf die mechanischen Schnittstellen zum Turm, nicht zuletzt auch aufgrund von durch den Rotor der Windenergieanlage begründeten vergleichsweise großen Nickmomenten. Letztere können jedoch auch immer dann spürbar werden, wenn vergleichsweise große Gewichtskräfte an langen Hebelarmen eines vergleichsweise stark dynamisch beanspruchten Triebstrangs wirken.

Auf den Triebstrang wirkt ein gegebenenfalls recht dynamisch anliegendes Eingangsdrehmoment **M1** (beispielsweise generiert durch den Rotor einer Windenergieanlage), und es kann ein Ausgangsdrehmoment **M2** abgegriffen werden, beispielsweise durch einen/den axial fluchtend montierten Generator 9. Auch die Gewichtskraft g wirkt auf die einzelnen Komponenten des Triebstrangs und kann insbesondere im Bereich der Getriebekomponente oder des Generators ein recht hohes Biegemoment begründen. Ferner können insbesondere bei Windenergieanlagen aufgrund des großen Rotordurchmessers spürbare Kippmomente hervorgerufen werden. In diesem Zusammenhang liefert die vorliegende Erfindung eine vorteilhafte Maßnahme zum Abstützen der abtriebsseitig an die Welle 2 angebundenen Komponenten.

Die Triebstranganordnung 10 gemäß der vorliegenden Erfindung weist eine zugmittelbasierte Zug-Momentenabstützung 18 auf, welche eine Mehrzahl von Zugmitteln 18.1, 18.2 umfasst, hier im Beispiel der Figuren wenigstens zwei unterschiedliche Arten von Zugmitteln 18.1, 18.2 in unterschiedlichen Ausrichtungen jeweils in Radialebenen Er. Die einzelnen Zugmittel oder eine Teilmenge davon sind bevorzugt an wenigstens einer axial übergreifenden/überlappenden Abstützstruktur befestigt (hier in Ausgestaltung als axial überlappende Zapfen 13.7, 17.7 des jeweiligen Gehäuses 13, 17), welche am jeweiligen Gehäuse insbesondere in ersten und zweiten Abstützpunkten/-bereichen P1, P2 abgestützt sind.

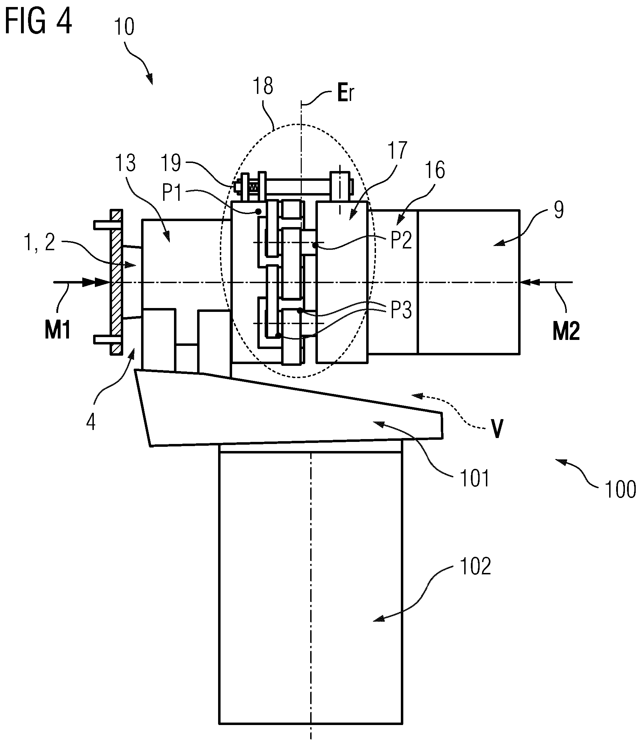

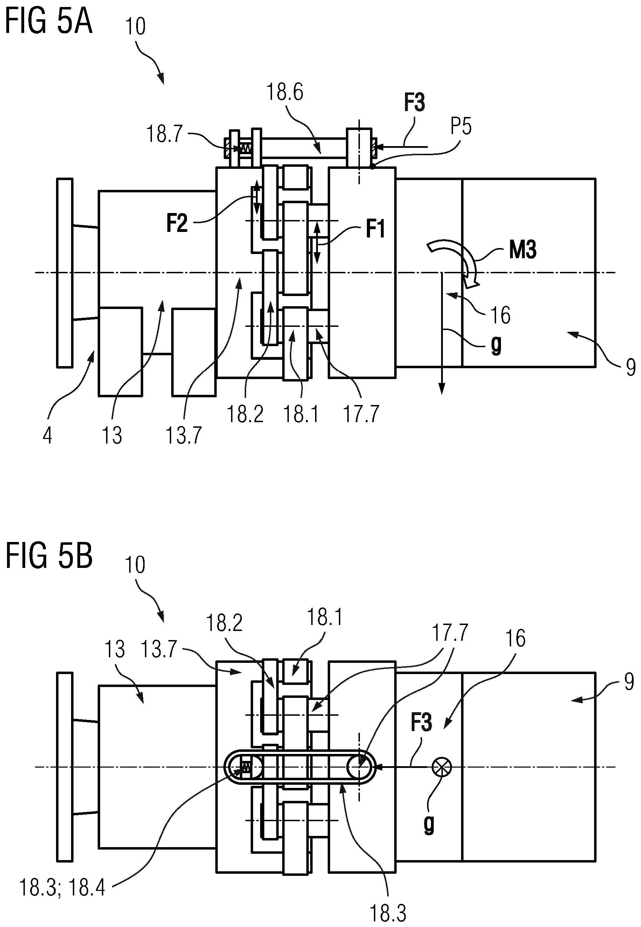

Die einzelnen Zugmittel können jeweils an einem Befestigungsabschnitt P3 am jeweiligen Zapfen 13.7, 17.7 befestigt sein, insbesondere schlaufenartig bei einem Umschlingungs-/Umfangswinkel am entsprechenden Außenmantelflächenabschnitt im Bereich von z.B. 150° bis 180°. Vorteilhafterweise ist der Triebstrang ab der Schnittstelle zwischen erstem und zweitem Gehäuse derart frei schwebend angeordnet, dass sich unterhalb des Triebstrangs ein Freiraum, Freivolumen V bis zur Basis 101 realisieren lässt, wobei die Basis 101 entsprechend kurz in axialer Richtung ausgestaltet werden kann. Wahlweise kann in Einzelfällen auch eine zusätzliche Abstützung nach unten zur Basis erfolgen, was jedoch nicht erforderlich ist, insbesondere da die hier beschriebene Zug-Momentenabstützung 18 auch eine in axialer Richtung wirkende Vorspanneinheit 18.6 umfassen kann (Fig. 4), mittels welcher eine entgegen dem Kippmoment **M3** wirkende Aufrichtkraft **F3** zwischen erstem und zweitem Gehäuse übertragbar ist(Fig. 5A), insbesondere in Kombination mit wenigstens einem Vorspannelement 18.7 (z.B. mechanische Feder oder Feder-Dämpfer-Kombination oder hydraulischer oder elektrischer Aktuator, wahlweise jeweils aktiv einstellbar), welches auch als eine Art Druckpuffer wirken kann.

Auch im Zusammenhang mit der bevorzugt radial weit außenliegend angeordneten Vorspanneinheit 18.6 kann ein wahlweise auch situationsbedingt aktives Einstellen einer zwischen den Gehäusen übertragenen Kraft erfolgen, insbesondere in Abhängigkeit von momentanen Belastungszuständen am Triebstrang, insbesondere basierend auf momentanen Messwerten des wenigstens einen Sensors.

Über einen oder mehrere auf dem jeweiligen Kraftflusspfad angeordnete Kraft-/Weg-Sensoren 19 kann eine Erfassung von Belastungszuständen erfolgen, wobei optional in Abhängigkeit von (momentanen) Belastungen auch eine Vorspannung oder dergleichen Parameter der Zugmittel und/oder der Vorspanneinheit eingestellt werden kann.

In **Fig. 4** ist eine Zug-Momentenabstützung 18 gezeigt, bei welcher die einzelnen Zugmittel(typen) an axial überlappenden Gehäusezapfen in der Art von Schlaufen anliegen, wobei eine vergleichsweise große (Reaktions-)Kraft F1 von einem ersten Typ Zugmittel aufgebracht wird (Drehmomentabstützung), und wobei auch eine vergleichsweise kleinere (Gegen-)Kraft F2 von einem zweiten Typ Zugmittel aufgebracht wird. Getriebe und Generator können ohne Abstützung nach unten in frei schwebender Anordnung über der Basis 101 angeordnet bleiben.

In **Fig. 5A, 5B** ist im Detail das axiale Ineinandergreifen veranschaulicht, und die Befestigung und Wirkungsweise der zusätzlichen (je nach herrschenden Gewichtskräften und Kippmomenten optionalen) Vorspanneinheit ist beispielhaft erläutert. Vorteilhaft wirkt diese radial weit außen oben liegend im jeweiligen Gehäuserandbereich.

Die Vorspanneinheit 18.6 ist beispielsweise an/zwischen radial nach oben abstehenden Laschen in einem weiteren Abstützpunkt/-bereich P5 am Getriebegehäuse und/oder Lagergehäuse abgestützt, insbesondere in Axialpositionen, welche die jeweilige Radialebene, in welchen die Zugmittel angeordnet sind, axial leicht überlappen/überspannen. Diese Art der Abstützung kann auch an mehreren Stellen entlang des Umfangs erfolgen, insbesondere auch mit dem Ziel der Schwingungsdämpfung z.B. auf der Höhe der Achse beidseitig des Triebstrangs, insbesondere um ein Kräftepaar auszubilden, dessen Wirkrichtung Schwingmode z.B. um die Gier-(Raum)Achse ("yaw"-Achse, vertikal bzw. nahezu senkrecht zur Triebstrangachse) oder die Kipp-(Raum)Achse (horizontal senkrecht zur Triebstrangachse) kompensiert.

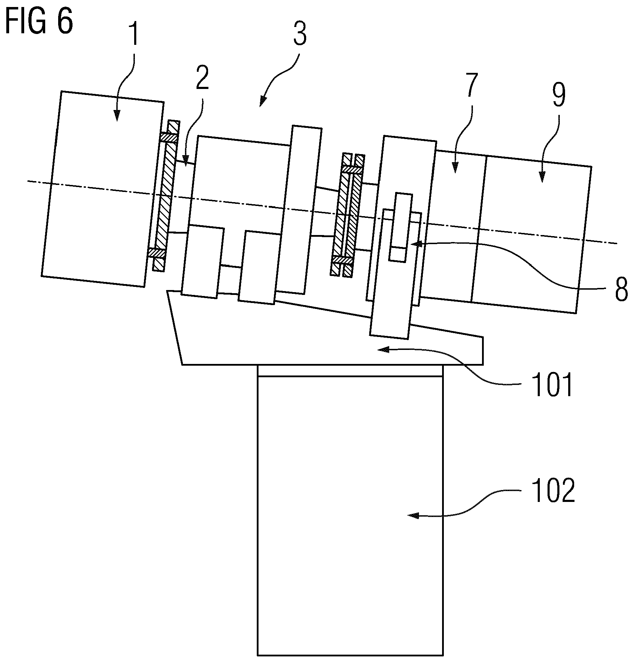

In **Fig. 6** ist eine vorbekannte Anordnung gemäß dem Stand der Technik dargestellt. Das Rotorlagergehäuse 3 und das Getriebegehäuse 7 sind jeweils unabhängig voneinander nach unten an der Basis abgestützt, wobei Drehmomente und gegebenenfalls auch Kippmomente mittels einer Drehmomentstützeinheit bzw. Gewichtskraftabstützung 8 zur Basis weitergeleitet werden. Insbesondere bei sehr dynamischer Beanspruchung des Triebstrangs und bei großen Kippmomenten hat sich diese Art der Abstützung jedoch als nachteilig erwiesen, wie zuvor weiter oben bereits erläutert.

### Bezugszeichenliste

- 1: Nabe
- 2: Welle, insbesondere Rotorwelle einer Windenergieanlage
- 3: Rotorlagergehäuse gemäß dem Stand der Technik
- 4: Rotorlager/Rotorwellenlagerung, insbesondere mit Pendel- oder Kegelrollenlager
- 5: Kupplung
- 7: Getriebegehäuse gemäß dem Stand der Technik
- 8: Drehmomentstützeinheit bzw. Gewichtskraftabstützung gemäß dem Stand der Technik
- 9: Generator
- 9.3: Außenmantelflächenabschnitt zur Anordnung oder Aufnahme eines/des Zugmittels
- 10: Triebstranganordnung
- 13: Rotorlagergehäuse (erstes Gehäuse)
- 13.1: axial übergreifende/überlappende Abstützstruktur, radial außen vom Getriebegehäuse
- 13.7: Zapfen/Nocke Rotorlager(gehäuse)
- 14: Umlenkpunkt/-rolle
- 15: (weitere) Stützkomponente
- 16: Getriebekomponente, insbesondere mit Planetengetriebestufe
- 17: Getriebegehäuse (zweites Gehäuse)
- 17.1: radial vorstehender Flansch oder dergleichen Kraftangriffskranz oder -segment oder Zapfen
- 17.3: Außenmantelflächenabschnitt zur Anordnung oder Aufnahme eines/des Zugmittels
- 17.7: Zapfen/Nocke Getriebe(gehäuse)
- 18: Zug-Drehmomentabstützung bzw. Zug-Momentenabstützung (jeweils zugmittelbasiert)
- 18.1: (erstes) Zugmittel bzw. erster Typ Zugmittel
- 18.2: weiteres (zweites) Zugmittel bzw. zweiter Typ Zugmittel
- 18.3: optional weiteres (drittes) Zugmittel
- 18.4: optional weiteres (viertes) Zugmittel
- 18.n: weiteres Zugmittel insbesondere für zusätzliche Abstützung/Kraftweiterleitung zur Basis
- 18.6: Vorspanneinheit
- 18.7: Vorspannelement
- 19: Kraft-/Weg-Sensor
- 20: Industriegetriebe
- 100: Windenergieanlage
- 101: Maschinenträger oder dergleichen Basis
- 102: Turm
- **A**: stirnseitige Ansicht, Blickrichtung auf Figur, in axialer Richtung
- **Er**: zugmittelspezifische Radialebene
- **F1**: (erste) insbesondere nach oben oder in erste Umfangsrichtung gerichtete Zugkraft
- **F2**: (zweite) insbesondere nach unten oder in zweite Umfangsrichtung gerichtete Zugkraft
- **F3**: (dritte) insbesondere axial gegen ein Kippmoment gerichtete Zugkraft
- **g**: Gewichtskraft
- **M**1: Eingangsdrehmoment
- **M2**: Ausgangsdrehmoment
- **M3**: Kippmoment, Gewichtskraftmoment
- **P1**: erster Abstützpunkt/-bereich am Rotorlagergehäuse (erstes Gehäuse)
- **P2**: zweiter Abstützpunkt/-bereich am Rotorlagergehäuse (erstes Gehäuse)
- **P3**: Befestigungspunkt für Zugmittel am zweiten Gehäuse oder Generator
- **P4**: weiterer Abstützpunkt/-bereich insbesondere an einer Basis
- **P5**: weiterer Abstützpunkt/-bereich am Getriebegehäuse (zweites Gehäuse)
- **V**: Freiraum, Freivolumen
- α: Umschlingungs-/Umfangswinkel

## Patentansprüche

1. Triebstranganordnung (10) für Industriegetriebe, insbesondere zur Anbindung an einen Rotor einer Windenergieanlage, aufweisend:
- ein erstes Gehäuse (13), welches eine Lagerung (4) für eine Welle (2) des Triebstrangs umgibt,
- eine insbesondere axial fluchtend an die Welle (2) gekoppelte Getriebekomponente (16), welche von einem zweiten Gehäuse (17) umgeben ist,
- eine Zug-Momentenabstützung oder Zug-Drehmomentabstützung (18) umfassend wenigstens ein zumindest an das zweite Gehäuse gekoppeltes Zugmittel (18.1), wobei die Zug-Momentenabstützung oder Zug-Drehmomentabstützung einem auf die Welle (2) oder die daran gekoppelte Getriebekomponente wirkenden Drehmoment (M1, M2) entgegenwirkt;
wobei die Zug-Momentenabstützung oder Zug-Drehmomentabstützung (18) zur Weiterleitung der auf das wenigstens eine Zugmittel (18.1) ausgeübten Reaktionskräfte (F1, F2) zumindest am ersten Gehäuse (13) abgestützt ist, **dadurch gekennzeichnet, dass** das wenigstens eine Zugmittel (18.1, 18.n) riemen-, band- oder seilartig ausgestaltet ist.

2. Triebstranganordnung (10) nach Anspruch 1 **dadurch gekennzeichnet, dass** die Weiterleitung der auf die Zug-Momentenabstützung oder Zug-Drehmomentabstützung (18) ausgeübten Reaktionskräfte ausschließlich zugmittelbasiert ist; oder wobei eine Kraftübertragung vom zweiten auf das erste Gehäuse ausschließlich mittels des wenigstens einen Zugmittels (18.1) erfolgt; oder wobei die Zug-Momentenabstützung oder Zug-Drehmomentabstützung (18) über eine Abstützstruktur (13.1) abgestützt ist, welche mittelbar mit dem zweiten Gehäuse (17) verbunden ist oder integral einstückig am zweiten Gehäuse vorgesehen ist, beispielsweise angegossen ist.

3. Triebstranganordnung (10) nach Anspruch 1 oder 2 **dadurch gekennzeichnet, dass** die Zug-Momentenabstützung oder Zug-Drehmomentabstützung (18) eine Mehrzahl von Zugmitteln (18.1) umfasst, welche jeweils sowohl am zweiten Gehäuse (17) als auch zumindest mittelbar am ersten Gehäuse (13) befestigt sind und den Kraftflusspfad vom zweiten auf das erste Gehäuse definieren; oder wobei die Zug-Momentenabstützung oder Zug-Drehmomentabstützung (18) eine Mehrzahl von Zugmitteln (18.1) umfasst, welche beidseitig in entgegengesetzten Umfangsrichtungen vom zweiten Gehäuse (17) abgehen und in entgegengesetzten Umfangsrichtungen gegensätzlich zwischen dem zweiten und ersten Gehäuse wirken, insbesondere zum Aufbringen sowohl einer ersten nach oben gerichteten Zugkraft (F1) als auch einer ersten nach unten gerichteten Zugkraft (F2).

4. Triebstranganordnung (10) nach einem der Ansprüche 1 bis 3 **dadurch gekennzeichnet, dass** das zweite Gehäuse (17) Befestigungspunkte (P3) definiert, an welchen das wenigstens eine oder jeweilige Zugmittel (18.1, 18.n) fixierbar ist, insbesondere in derartiger Anordnung, dass das jeweilige Zugmittel (18.1) bei bestimmungsgemäßer Winkelposition des Triebstrangs über einen vordefinierbaren Umfangswinkel (α) um eine/die Außenmantelfläche des Gehäuses gelegt ist, insbesondere mit einem Umfangswinkel von mindestens 90°, bevorzugt mindestens 125°; oder wobei das erste und zweite Gehäuse in der Art einer Klauenkupplung ineinandergreifen, insbesondere mittels axial überlappender Zapfen oder dergleichen axial hervorstehender Abschnitte, an welchen die jeweiligen Zugmittel angreifen.

5. Triebstranganordnung (10) nach einem der vorhergehenden Ansprüche **dadurch gekennzeichnet, dass** die Zug-Momentenabstützung oder Zug-Drehmomentabstützung (18) unabhängig von rotierenden Komponenten am ersten Gehäuse (13) abgestützt ist.

6. Triebstranganordnung (10) nach einem der vorhergehenden Ansprüche **dadurch gekennzeichnet, dass** das erste Gehäuse (13) eine axial überlappende Abstützstruktur (13.1) aufweist, insbesondere in einer Anordnung radial außen vom zweiten Gehäuse (17), über welche die Kraftweiterleitung seitens der Zug-Drehmomentabstützung (18) erfolgt; oder wobei wenigstens eine das zweite Gehäuse (17) zumindest teilweise axial überlappende Abstützstruktur (13.1) am ersten Gehäuse (13) vorgesehen ist, insbesondere in stoffschlüssiger Befestigung oder in integral-einstückiger Ausgestaltung, an welcher das wenigstens eine Zugmittel (18.1, 18.n) befestigt ist; oder wobei wenigstens eine das zweite Gehäuse (17) zumindest teilweise axial überlappende Abstützstruktur (13.1) am ersten Gehäuse vorgesehen ist, welche am ersten Gehäuse in wenigstens drei Abstützpunkten oder -bereichen (P1, P2) abgestützt ist.

7. Triebstranganordnung (10) nach einem der vorhergehenden Ansprüche **dadurch gekennzeichnet, dass** die Zug-Momentenabstützung oder Zug-Drehmomentabstützung (18) eine Mehrzahl von Zugmitteln (18.1, 18.n) umfasst, welche in unterschiedlichen Axialpositionen an das zweite Gehäuse (17) und wahlweise auch an einen/den an das zweite Gehäuse gekuppelten Generator (9) angebunden sind und zumindest einer relativen Drehbewegung des zweiten Gehäuses (17) relativ zum ersten Gehäuse (13) durch Aufbringen zumindest einer nach oben und/oder in Umfangsrichtung gerichteten Zugkraft (F1) entgegenwirken.

8. Triebstranganordnung (10) nach einem der vorhergehenden Ansprüche **dadurch gekennzeichnet, dass** unterhalb des zweiten Gehäuses (17) und wahlweise auch unterhalb eines/des an das zweite Gehäuse gekuppelten Generators (9) ein Freiraum (V) vorgesehen ist, über welchem das zweite Gehäuse und gegebenenfalls auch ein/der daran gekuppelte Generator (9) abstützfrei über einem/dem Maschinenträger frei im Raum anordenbar sind, insbesondere mit Bewegungsfreiheitsgrad zumindest nach unten.

9. Triebstranganordnung (10) nach einem der vorhergehenden Ansprüche **dadurch gekennzeichnet, dass** das wenigstens eine Zugmittel (18.1, 18.n) als Keil- oder Zahnriemen ausgestaltet ist; wobei das wenigstens eine Zugmittel zumindest kraft-/reibschlüssig und wahlweise auch formschlüssig an einer/der Außenmantelfläche (17.3) zumindest des zweiten Gehäuses (17) zur Anlage kommt.

10. Triebstranganordnung (10) nach einem der vorhergehenden Ansprüche **dadurch gekennzeichnet, dass** die Zug-Momentenabstützung (18) eine Mehrzahl von Zugmitteln umfasst, welche sich sowohl in einer ersten Zugmittelrichtung, insbesondere in der durch das eingangsseitig am Triebstrang wirkende Drehmoment definierten Energieerzeugungsrichtung, als auch in einer zweiten Zugmittelrichtung, insbesondere in Bremsbetriebsrichtung erstrecken; oder wobei die Zug-Momentenabstützung (18) eine Mehrzahl von ersten Zugmitteln umfasst, welche sich in einer ersten Zugkraftrichtung entgegen einem ersten um die axiale Ausrichtung des Triebstrangs wirkenden Drehmoment erstrecken, und wobei die Zug-Momentenabstützung (18) eine Mehrzahl von zweiten Zugmitteln umfasst, welche sich in einer zweiten Zugkraftrichtung entgegen einem zweiten um die axiale Ausrichtung des Triebstrangs wirkenden Drehmoment erstrecken, wobei das erste Drehmoment bei bestimmungsgemäßem Einsatz des Triebstrangs größer ist als das zweite Drehmoment, und wobei die ersten Zugmittel entsprechend dimensioniert sind.

11. Triebstranganordnung (10) nach einem der vorhergehenden Ansprüche **dadurch gekennzeichnet, dass** die Zug-Momentenabstützung ferner wenigstens eine Vorspanneinheit eingerichtet und angeordnet zum Aufbringen und Übertragen einer einem schwerkraftbegründeten Kippmoment entgegenwirkender Aufrichtkraft auf das zweite Gehäuse aufweist, insbesondere in einer Anordnung zwischen einer Außenmantelfläche des ersten und zweiten Gehäuses; und/oder wobei die Zug-Momentenabstützung eine/die Vorspanneinheit aufweist, welche funktional von der Wirkung des wenigstens einen Zugmittels entkoppelt ist, insbesondere indem die Vorspanneinheit im Wesentlichen in axialer Richtung zwischen den Gehäusen wirkt und das oder die Zugmittel zur Drehmomentübertragung im Wesentlichen nur in Umfangs- und/oder Radialrichtung zwischen den Gehäusen wirkt/wirken.

12. Industriegetriebe (10) mit einer Triebstranganordnung (10) nach einem der vorhergehenden Ansprüche, zum Abstützen von seitens einer Getriebekomponente (16) wirkenden Drehmomenten ausschließlich mittels wenigstens eines Zugmittels (18.1, 18.n), insbesondere in einer Anordnung in einer Windenergieanlage.

13. Verfahren zum Einstellen einer Drehmomentstützung einer Triebstranganordnung (10) eines Industriegetriebes, wobei ein eine Lagerung (4) einer Welle (2) des Triebstrangs umgebendes erstes Gehäuse (13) gegen ein eine an die Welle (2) gekoppelte Getriebekomponente (16) umgebendes zweites Gehäuse (17) gelagert ist/wird, wobei mittels einer Zug-Momentenabstützung oder Zug-Drehmomentabstützung (18), welche einem auf die Welle (2) oder die daran gekoppelte Getriebekomponente wirkenden Drehmoment (M1, M2) entgegenwirkt, eine/die Drehmomentstützung des zweiten Gehäuses (17) und damit der Getriebekomponente am ersten Gehäuse (13) durch Aufnahme und Weiterleitung von ausschließlich Zugkräften zumindest seitens des zweiten Gehäuses zumindest in das erste Gehäuse erfolgt, **dadurch gekennzeichnet, dass** die Aufnahme und Weiterleitung von ausschließlich Zugkräften mittels wenigstens eines riemen-, band- oder seilartig ausgestalteten Zugmittels (18.1, 18.n) erfolgt, insbesondere bei einem Triebstrang mit am zweiten Gehäuse (17) abgestützten Generator (9), in einer Triebstranganordnung (10) nach einem der Ansprüche 1 bis 11 oder in einem Industriegetriebe (20).

14. Verfahren nach dem vorhergehenden Verfahrensanspruch, wobei die Aufnahme und Weiterleitung von ausschließlich Zugkräften in zumindest das erste Gehäuse (13) mittels einer Mehrzahl von Zugmitteln (18.1, 18.n) erfolgt, welche jeweils sowohl am zweiten Gehäuse (17) als auch zumindest mittelbar am ersten Gehäuse (13) befestigt sind und den Kraftflusspfad vom zweiten auf das erste Gehäuse definieren.

15. Verwendung einer Triebstranganordnung (10) nach einem der Ansprüche 1 bis 11 in einem Industriegetriebe (20), insbesondere in einer Windenergieanlage (100) in einer Anordnung zwischen einem/dem Rotor der Windenergieanlage (100) und einem/dem Generator (9) der Windenergieanlage, insbesondere in einachsig fluchtender Anordnung des gesamten Triebstrangs, wobei mittels einer/der Zug-Momentenabstützung oder Zug-Drehmomentabstützung (18) der Triebstranganordnung (10) ausschließlich Zugkräfte zumindest von einem/dem Getriebegehäuse (17) der Triebstranganordnung (10) auf zumindest ein/das um eine/die Welle des Triebstrangs angeordnetes Rotorlagergehäuse (13) zugmittelbasiert mittels wenigstens eines riemen-, band- oder seilartig ausgestalteten Zugmittels übertragen werden, bevorzugt mittels einer Mehrzahl von Zugmitteln, wobei das Getriebegehäuse (17) und etwaige weitere daran gekuppelte Komponenten wie z.B. ein Generator (9) bevorzugt ausschließlich am Rotorlagergehäuse (13) abgestützt ist/sind, bevorzugt mittels der Mehrzahl von Zugmitteln.

## Claims

1. Drivetrain arrangement (10) for industrial gearboxes, in particular for attachment to a rotor of a wind turbine, having:
- a first housing (13) which surrounds a bearing arrangement (4) for a shaft (2) of the drivetrain,
- a gearbox component (16) which is coupled to the shaft (2) in particular in an axially aligned manner and is surrounded by a second housing (17),
- a traction-moment support or traction-torque support (18) which comprises at least one traction means (18.1) coupled at least to the second housing, wherein the traction-moment support or traction-torque support counteracts a torque (M1, M2) that acts on the shaft (2) or on the gearbox component coupled thereto;
wherein the traction-moment support or traction-torque support (18), for transmitting the reaction forces (F1, F2) exerted on the at least one traction means (18.1), is supported at least against the first housing (13), **characterized in that** the at least one traction means (18.1, 18.n) is of belt-like, band-like or rope-like design.

2. Drivetrain arrangement (10) according to Claim 1, **characterized in that** the transmission of the reaction forces exerted on the traction-moment support or traction-torque support (18) is exclusively traction-means-based; or wherein a transmission of force from the second housing to the first housing takes place exclusively by means of the at least one traction means (18.1); or wherein the traction-moment support or traction-torque support (18) is supported via a supporting structure (13.1) which is connected indirectly to the second housing (17) or is provided integrally in one piece, for example cast, on the second housing.

3. Drivetrain arrangement (10) according to Claim 1 or 2, **characterized in that** the traction-moment support or traction-torque support (18) comprises a plurality of traction means (18.1) which are each fastened both to the second housing (17) and, at least indirectly, to the first housing (13) and which define the force-flow path from the second housing to the first housing; or wherein the traction-moment support or traction-torque support (18) comprises a plurality of traction means (18.1) which proceed from the second housing (17) on either side in opposite circumferential directions and which act oppositely between the second and first housings in opposite circumferential directions, in particular for applying both a first upwardly directed traction force (F1) and a first downwardly directed traction force (F2).

4. Drivetrain arrangement (10) according to one of Claims 1 to 3, **characterized in that** the second housing (17) defines fastening points (P3) to which the at least one or respective traction means (18.1, 18.n) is fixable, in particular in such an arrangement that the respective traction means (18.1), with the angular position of the drivetrain as intended, is placed around an/the outer shell surface of the housing over a predefinable circumferential angle (α), in particular with a circumferential angle of at least 90°, preferably at least 125°; or wherein the first and second housings interengage in the manner of a claw coupling, in particular by means of axially overlapping pins or similar axially protruding portions on which the respective traction means engage.

5. Drivetrain arrangement (10) according to one of the preceding claims, **characterized in that** the traction-moment support or traction-torque support (18) is supported against the first housing (13) independently of rotating components.

6. Drivetrain arrangement (10) according to one of the preceding claims, **characterized in that** the first housing (13) has a supporting structure (13.1) of axially overlapping form, in particular in an arrangement radially outside the second housing (17), via which the transmission of force by the traction-torque support (18) takes place; or wherein provision is made on the first housing (13), in particular fastened in a materially bonded manner or configured integrally in one piece, of at least one supporting structure (13.1) which at least partially axially overlaps the second housing (17) and to which the at least one traction means (18.1, 18.n) is fastened; or wherein provision is made on the first housing of at least one supporting structure (13.1) which at least partially axially overlaps the second housing (17) and which is supported against the first housing at at least three supporting points or regions (P1, P2).

7. Drivetrain arrangement (10) according to one of the preceding claims, **characterized in that** traction-moment support or traction-torque support (18) comprises a plurality of traction means (18.1, 18.n) which are attached at different axial positions to the second housing (17) and selectively also to a/the generator (9), which is coupled to the second housing, and counteract at least a relative rotational movement of the second housing (17) relative to the first housing (13) by application of at least an upwardly and/or circumferentially directed traction force (F1).

8. Drivetrain arrangement (10) according to one of the preceding claims, **characterized in that** provision is made below the second housing (17) and selectively also below a/the generator (9) coupled to the second housing of a clearance (V) above which the second housing and possibly also a/the generator (9) coupled thereto are freely arrangeable spatially above a/the machine support without support, in particular with a degree of freedom of movement at least downwards.

9. Drivetrain arrangement (10) according to one of the preceding claims, **characterized in that** the at least one traction means (18.1, 18.n) is in the form of a V-belt or toothed belt; wherein the at least one traction means comes into abutment against a/the outer shell surface (17.3) at least of the second housing (17) at least in a force-fitting/frictionally engaging manner and selectively also in a form-fitting manner.

10. Drivetrain arrangement (10) according to one of the preceding claims, **characterized in that** the traction-moment support (18) comprises a plurality of traction means which extend both in a first traction-means direction, in particular in the energy-generation direction defined by the torque acting on the drivetrain at the input side, and in a second traction-means direction, in particular in a braking-operation direction; or wherein the traction-moment support (18) comprises a plurality of first traction means which extend in a first traction-force direction counter to a first torque acting about the axial orientation of the drivetrain, and wherein the traction-moment support (18) comprises a plurality of second traction means which extend in a second traction-force direction counter to a second torque acting about the axial orientation of the drivetrain, wherein the first torque is greater than the second torque with the drivetrain used as intended, and wherein the first traction means are dimensioned accordingly.

11. Drivetrain arrangement (10) according to one of the preceding claims, **characterized in that** the traction-moment support further has at least one preload unit set up and arranged for application and transmission of a restoring force, which counteracts a tilting moment induced by gravitational force, to the second housing, in particular in an arrangement between the outer shell surfaces of the first and second housings; and/or wherein the traction-moment support has a/the preload unit, which is functionally decoupled from the action of the at least one traction means, in particular by the preload unit acting substantially axially between the housings and the traction means, for torque transmission, acting substantially only circumferentially and/or radially between the housings.

12. Industrial gearbox (10) having a drivetrain arrangement (10) according to one of the preceding claims for supporting torques acting by way of a gearbox component (16) exclusively by means of at least one traction means (18.1, 18.n), in particular in an arrangement in a wind turbine.

13. Method for setting torque support of a drivetrain arrangement (10) of an industrial gearbox, wherein a first housing (13) surrounding a bearing arrangement (4) for a shaft (2) of the drivetrain has been/is mounted against a second housing (17) surrounding a gearbox component (16) which is coupled to the shaft (2), wherein, by means of a traction-moment support or traction-torque support (18), which counteracts a torque (M1, M2) acting on the shaft (2) or on the gearbox component coupled thereto, torque support or the torque support of the second housing (17) and thus of the gearbox component against the first housing (13) takes place by way of accommodation of exclusively traction forces and transmission thereof at least from the second housing at least into the first housing, **characterized in that** the accommodation and transmission of exclusively traction forces takes place by means of at least one traction means (18.1, 18.n) of belt-like, band-like or rope-like design, in particular in a drivetrain with a generator (9) supported against the second housing (17), in a drivetrain arrangement (10) according to one of Claims 1 to 11 or in an industrial gearbox (20).

14. Method according to the preceding method claim, wherein the accommodation of exclusively traction forces and transmission thereof into at least the first housing (13) takes place by means of a plurality of traction means (18.1, 18.n) which are each fastened both to the second housing (17) and, at least indirectly, to the first housing (13) and which define the force-flow path from the second housing to the first housing.

15. Use of a drivetrain arrangement (10) according to one of Claims 1 to 11 in an industrial gearbox (20), in particular in a wind turbine (100) in an arrangement between a/the rotor of the wind turbine (100) and a/the generator (9) of the wind turbine, in particular in an arrangement of the entire drivetrain of single-axis alignment, wherein, by means of a/the traction-moment support or traction-torque support (18) of the drivetrain arrangement (10), exclusively traction forces are transmitted on the basis of traction means at least from a/the gearbox housing (17) of the drivetrain arrangement (10) to at least a/the rotor-bearing housing (13), which is arranged around a/the shaft of the drivetrain, by means of at least one traction means of belt-like, band-like or rope-like design, preferably by means of a plurality of traction means, wherein the gearbox housing (17) and any further components coupled thereto, such as for example a generator (9), is/are supported preferably exclusively against the rotor-bearing housing (13), preferably by means of the plurality of traction means.

## Revendications

1. Agencement de chaîne cinématique (10) pour transmission industrielle, notamment destiné à être raccordé à un rotor d'une éolienne, comprenant :
- un premier boîtier (13) qui entoure un palier (4) pour un arbre (2) de la chaîne cinématique,
- un composant de transmission (16), en particulier couplé de manière axialement alignée à l'arbre (2), lequel est entouré par un deuxième boîtier (17),
- un organe de support de couple en traction ou organe de support de couple de rotation en traction (18) comprenant au moins un moyen de traction (18.1) couplé au moins au deuxième boîtier, l'organe de support de couple en traction ou organe de support de couple de rotation en traction s'opposant à un couple de rotation (M1, M2) agissant sur l'arbre (2) ou sur le composant de transmission qui y est couplé ;
l'organe de support de couple en traction ou organe de support de couple de rotation en traction (18) étant, pour le transfert des forces de réaction (F1, F2) exercées sur l'au moins un moyen de traction (18.1), supporté au moins au niveau du premier boîtier (13), **caractérisé en ce que** l'au moins un moyen de traction (18.1, 18.n) est conçu sous forme de courroie, de bande ou de câble.

2. Agencement de chaîne cinématique (10) selon la revendication 1, **caractérisé en ce que** le transfert des forces de réaction exercées sur l'organe de support de couple en traction ou organe de support de couple de rotation en traction (18) est exclusivement basé sur un moyen de traction ; ou dans lequel un transfert de force du deuxième au premier boîtier a lieu exclusivement au moyen de l'au moins un moyen de traction (18.1) ; ou dans lequel l'organe de support de couple en traction ou organe de support de couple de rotation en traction (18) est supporté par une structure de support (13.1), laquelle est reliée de manière indirecte au deuxième boîtier (17) ou est prévue, par exemple coulée, intégralement d'un seul tenant sur le deuxième boîtier.

3. Agencement de chaîne cinématique (10) selon la revendication 1 ou 2, **caractérisé en ce que** l'organe de support de couple en traction ou organe de support de couple de rotation en traction (18) comprend une pluralité de moyens de traction (18.1), lesquels sont chacun fixés à la fois au deuxième boîtier (17) et au moins indirectement au premier boîtier (13) et définissent le chemin de flux de force du deuxième au premier boîtier ; ou dans lequel l'organe de support de couple en traction ou organe de support de couple de rotation en traction (18) comprend une pluralité de moyens de traction (18.1), lesquels partent du deuxième boîtier (17) de part et d'autre dans des directions circonférentielles opposées et agissent de manière contraire entre le deuxième et le premier boîtier dans des directions circonférentielles opposées, notamment pour appliquer à la fois une première force de traction dirigée vers le haut (F1) ainsi qu'une première force de traction dirigée vers le bas (F2).

4. Agencement de chaîne cinématique (10) selon l'une des revendications 1 à 3, **caractérisé en ce que** le deuxième boîtier (17) définit des points de fixation (P3) auxquels l'au moins un moyen de traction ou le moyen de traction respectif (18.1, 18.n) peut être fixé, notamment dans un agencement tel que le moyen de traction respectif (18.1), en position angulaire conforme à l'utilisation de la chaîne cinématique, est disposé autour d'une/de la surface d'enveloppe extérieure du boîtier sur un angle circonférentiel (α) prédéfinissable, notamment avec un angle circonférentiel d'au moins 90°, de préférence d'au moins 125° ; ou dans lequel le premier et le deuxième boîtier s'engrènent l'un dans l'autre à la manière d'un accouplement à griffes, notamment au moyen de tourillons à chevauchement axial ou de sections saillantes axialement analogues, sur lesquels les moyens de traction respectifs s'engagent.

5. Agencement de chaîne cinématique (10) selon l'une des revendications précédentes, **caractérisé en ce que** l'organe de support de couple en traction ou organe de support de couple de rotation en traction (18) est supporté au niveau du premier boîtier (13) indépendamment de composants en rotation.

6. Agencement de chaîne cinématique (10) selon l'une des revendications précédentes, **caractérisé en ce que** le premier boîtier (13) présente une structure de support (13.1) à chevauchement axial, notamment dans un agencement radialement à l'extérieur du deuxième boîtier (17), par laquelle s'effectue le transfert de force de la part de l'organe de support de couple de rotation en traction (18) ; ou dans lequel au moins une structure de support (13.1) chevauchant axialement au moins partiellement le deuxième boîtier (17) est prévue sur le premier boîtier (13), notamment avec une fixation par liaison de matière ou dans une réalisation intégrale d'un seul tenant, à laquelle l'au moins un moyen de traction (18.1, 18.n) est fixé ; ou dans lequel au moins une structure de support (13.1) chevauchant axialement au moins partiellement le deuxième boîtier (17) est prévue sur le premier boîtier, laquelle est supportée sur le premier boîtier en au moins trois points ou zones de support (P1, P2).

7. Agencement de chaîne cinématique (10) selon l'une des revendications précédentes, **caractérisé en ce que** l'organe de support de couple en traction ou organe de support de couple de rotation en traction (18) comprend une pluralité de moyens de traction (18.1, 18.n), lesquels sont raccordés en différentes positions axiales au deuxième boîtier (17) et, au choix, également à un/au générateur (9) accouplé au deuxième boîtier, et s'opposent au moins à un mouvement de rotation relatif du deuxième boîtier (17) par rapport au premier boîtier (13) par application d'au moins une force de traction (F1) dirigée vers le haut et/ou dans la direction circonférentielle.

8. Agencement de chaîne cinématique (10) selon l'une des revendications précédentes, **caractérisé en ce qu'**un espace libre (V) est prévu au-dessous du deuxième boîtier (17) et, au choix, également au-dessous d'un/du générateur (9) accouplé au deuxième boîtier, par l'intermédiaire duquel le deuxième boîtier et, le cas échéant, également un/le générateur (9) qui y est accouplé peuvent être agencés librement dans l'espace au-dessus d'un/du bâti de machine, sans appui, notamment avec un degré de liberté de mouvement au moins vers le bas.

9. Agencement de chaîne cinématique (10) selon l'une des revendications précédentes, **caractérisé en ce que** l'au moins un moyen de traction (18.1, 18.n) est conçu sous forme de courroie trapézoïdale ou dentée ; dans lequel l'au moins un moyen de traction vient en appui au moins par adhérence et/ou par frottement, et au choix également par complémentarité de forme, sur une/la surface d'enveloppe extérieure (17.3) au moins du deuxième boîtier (17).

10. Agencement de chaîne cinématique (10) selon l'une des revendications précédentes, **caractérisé en ce que** l'organe de support de couple en traction (18) comprend une pluralité de moyens de traction, lesquels s'étendent à la fois dans une première direction des moyens de traction, notamment dans la direction de production d'énergie définie par le couple de rotation agissant en entrée sur la chaîne cinématique, ainsi que dans une deuxième direction des moyens de traction, notamment dans la direction de fonctionnement en freinage ; ou dans lequel l'organe de support de couple en traction (18) comprend une pluralité de premiers moyens de traction, lesquels s'étendent dans une première direction de force de traction à l'encontre d'un premier couple de rotation agissant autour de l'orientation axiale de la chaîne cinématique, et dans lequel l'organe de support de couple en traction (18) comprend une pluralité de deuxièmes moyens de traction, lesquels s'étendent dans une deuxième direction de force de traction à l'encontre d'un deuxième couple de rotation agissant autour de l'orientation axiale de la chaîne cinématique, le premier couple de rotation étant supérieur au deuxième couple de rotation lors de l'utilisation conforme de la chaîne cinématique, et les premiers moyens de traction étant dimensionnés en conséquence.

11. Agencement de chaîne cinématique (10) selon l'une des revendications précédentes, **caractérisé en ce que** l'organe de support de couple en traction comprend en outre au moins une unité de précontrainte configurée et agencée pour appliquer et transmettre au deuxième boîtier une force de redressement s'opposant à un moment de basculement dû à la gravité, notamment dans un agencement entre une surface d'enveloppe extérieure du premier et du deuxième boîtier ; et/ou dans lequel l'organe de support de couple en traction comprend une/l'unité de précontrainte, laquelle est fonctionnellement découplée de l'action de l'au moins un moyen de traction, notamment par le fait que l'unité de précontrainte agit essentiellement dans la direction axiale entre les boîtiers et le ou les moyens de traction agissent pour le transfert de couple de rotation essentiellement uniquement dans la direction circonférentielle et/ou radiale entre les boîtiers.

12. Transmission industrielle (10) comprenant un agencement de chaîne cinématique (10) selon l'une des revendications précédentes, pour le support de couples de rotation agissant de la part d'un composant de transmission (16) exclusivement au moyen d'au moins un moyen de traction (18.1, 18.n), notamment dans un agencement dans une éolienne.

13. Procédé de réglage d'un support de couple de rotation d'un agencement de chaîne cinématique (10) d'une transmission industrielle, dans lequel un premier boîtier (13) entourant un palier (4) d'un arbre (2) de la chaîne cinématique est monté contre un deuxième boîtier (17) entourant un composant de transmission (16) accouplé à l'arbre (2), dans lequel, au moyen d'un organe de support de couple en traction ou organe de support de couple de rotation en traction (18), qui s'oppose à un couple de rotation (M1, M2) agissant sur l'arbre (2) ou sur le composant de transmission qui y est accouplé, un/le support de couple de rotation du deuxième boîtier (17) et donc du composant de transmission sur le premier boîtier (13) a lieu par réception et transfert exclusivement de forces de traction au moins du côté du deuxième boîtier au moins vers le premier boîtier, **caractérisé en ce que** la réception et le transfert exclusivement de forces de traction ont lieu au moyen d'au moins un moyen de traction (18.1, 18.n) conçu sous forme de courroie, de bande ou de câble, notamment dans le cas d'une chaîne cinématique avec un générateur (9) supporté sur le deuxième boîtier (17), dans un agencement de chaîne cinématique (10) selon l'une des revendications 1 à 11 ou dans une transmission industrielle (20).

14. Procédé selon la revendication de procédé précédente, dans lequel la réception et le transfert de forces de traction exclusivement vers au moins le premier boîtier (13) ont lieu au moyen d'une pluralité de moyens de traction (18.1, 18.n), lesquels sont chacun fixés à la fois au deuxième boîtier (17) et au moins indirectement au premier boîtier (13) et définissent le chemin de flux de force du deuxième au premier boîtier.

15. Utilisation d'un agencement de chaîne cinématique (10) selon l'une des revendications 1 à 11 dans une transmission industrielle (20), notamment dans une éolienne (100), dans un agencement entre un/le rotor de l'éolienne (100) et un/le générateur (9) de l'éolienne, notamment dans un agencement à alignement uniaxial du train cinématique dans son ensemble, dans laquelle, au moyen d'un/de l'organe de support de couple en traction ou organe de support de couple de rotation en traction (18) de l'agencement de chaîne cinématique (10), des forces de traction exclusivement sont transmises au moins d'un/du boîtier de transmission (17) de l'agencement de chaîne cinématique (10) vers au moins un/le boîtier de palier de rotor (13) agencé autour d'un/de l'arbre de la chaîne cinématique, de manière basée sur un moyen de traction, au moyen d'au moins un moyen de traction conçu sous forme de courroie, de bande ou de câble, de préférence au moyen d'une pluralité de moyens de traction, le boîtier de transmission (17) et d'éventuels autres composants qui y sont accouplés, tels que p. ex. un générateur (9), étant de préférence supportés exclusivement sur le boîtier de palier de rotor (13), de préférence au moyen de la pluralité de moyens de traction.
